# EUROPEAN PATENT APPLICATION

(11) **EP 3 865 251 A1**
(43) Date of publication of application: **18.08.2021**
(21) Application number: 19871450.3
(22) Date of filing: 09.10.2019
(51) Int. Cl.: B25B 21/00

(54) **ATTACHMENT-TYPE ALIGNING DEVICE AND ELECTRIC POWER TOOL**

(30) Priority: 11.10.2018 JP 2018192244
(71) Applicant: Muratechnology Co., Ltd., Osaka 544-0031 (JP)
(72) Inventor: NAKAMURA Daijiro, Osaka-shi, Osaka 544-0031 (JP)
(74) Representative: Horn Kleimann Waitzhofer Patentanwälte PartG mbB
(86) International application number: PCT/JP2019/039810
(87) International publication number: WO 2020/075752

(57) **Abstract**

An object is to provide an attachment-type aligning device capable of aligning a base shaft held by a base shaft holder to prevent a vibration of a rotary jig during a rotation thereof, and an electric screwdriver including such a base shaft holder having the attachment-type aligning device attached thereto. An alignment adaptor (40 (40X)) includes an alignment bearing (50 (50a, 50b)) contacting and aligning a base shaft (6), of a rotary jig (5), extending through a through-hole (40a (40Xa)); and an attachment unit (90 (90X)) attaching the attachment bearing (50 (50a, 50b)) to a predetermined position in a holder body (10) included in a base shaft holder (1) allowing the base shaft (6) to be inserted thereto from an axial-direction tip side (Lf) and holding the base shaft (6). The alignment adaptor (40 (40X)) aligns the base shaft (6) attached to, and held by, the base shaft holder (1).

## Description

### TECHNICAL FIELD

The present invention relates to an attachment-type aligning device that is attachable to, for example, a base shaft holder that accepts insertion of a base shaft of a rotary jig such as, for example, a screwdriver bit, a drill bit or the like and thus holds the base shaft, to align the base shaft, and also relates to an electric screwdriver including such a base shaft holder having the attachment-type aligning device attached thereto.

### BACKGROUND ART

A conventionally proposed base shaft holder to be located at a tip end of an electric screwdriver or the like prevents a base shaft of a rotary jig, held by the base shaft holder, from being inadvertently falling out (see Patent Document 1).

This base shaft holder includes a holder body having a base shaft insertion hole into which a base shaft of a rotary jig is detachably insertable, and also having a through-hole in which a steel ball engageable with an engagement groove formed in an outer surface of the base shaft is movable; the steel ball located in the through-hole; and a cylindrical outsert member that is slidably outserted to the holder body; and a spring urging the outsert member toward a base end of the holder body.

When the base shaft is inserted into the base shaft insertion hole of the base shaft holder, the outsert member causes the steel ball to protrude from an inner circumferential surface of the base shaft insertion hole and thus causes the steel ball to be engaged with the engagement groove. In this manner, the base shaft inserted into the base shaft holder may be held so as not to inadvertently fall out.

However, if, in the state where the base shaft is inserted or the electric tool is used, the position at which, or the direction in which, the base shaft is inserted is slightly shifted from the center of rotation, a so-called runout may occur, namely, the rotary jig may vibrate. The reason for this is that the base shaft insertion hole into which the base shaft is insertable is formed to be slightly larger than the base shaft.

### CITATION LIST

### PATENT LITERATURE

JP 2006-198755A

### SUMMARY OF INVENTION

### TECHNICAL PROBLEM

In such a situation, the present invention has an object of providing an attachment-type aligning device capable of aligning a base shaft held by a base shaft holder to prevent a vibration (runout) of a rotary jig during a rotation thereof, and also providing an electric screwdriver including such a base shaft holder having the attachment-type aligning device attached thereto.

### SOLUTION TO PROBLEM

The present invention is directed to an attachment-type aligning device including an alignment portion contacting and aligning a base shaft, of a rotary jig, extending through a through-hole; and an attachment member attaching the attachment portion to a tip end of a holder body included in a base shaft holder allowing the base shaft to be inserted thereto from a tip side thereof and holding the base shaft. The attachment-type aligning device aligns the base shaft attached to, and held by, the base shaft holder.

The above-described rotary jig may be a rotatable drill bit, a cross-head or flat-head screwdriver bit or the like included in a manual tool or an electric tool, and the base shaft of the rotary jig is also called a tool shank.

The base shaft encompasses a base shaft having a polygonal cross-section such as a hexagonal cross-section or the like, a circular cross-section or a cross-section of any of various other shapes.

The alignment portion may be a portion moving diametrically inward to contact an outer surface of the base shaft, or a portion that is deformed, for example, is extended diametrically inward to contact the outer surface of the base shaft. Alternatively, a plurality of alignment portions may be provided to contact the base shaft at a plurality of positions to align the base shaft; or the alignment portion may be a single member, for example, an elastic ring that is outserted to the base shaft so as to urge an outer circumferential surface of the base shaft diametrically inward.

According to the invention, the base shaft held by the base shaft holder is aligned, and thus the rotary jig may be prevented from vibrating while rotating.

This will be described in more detail. Since the attachment-type aligning device is attached to the base shaft holder holding the base shaft, the alignment portion may align the base shaft held by the base shaft holder, and thus the rotary jig may be prevented from vibrating while rotating.

In an embodiment of the invention, the attachment member may include a position adjustment portion, the position of which is adjusted by use of a tip-side tapering surface formed at a tip end of a base shaft insertion hole of the holder body and expanding toward the tip end, the position of the position adjustment portion being adjusted such that an axial direction of the alignment portion matches an axial direction of the holder body.

The position adjustment portion may be a single tapering surface or a plurality of tapering surfaces provided with a predetermined interval therebetween, the position(s) of which may be adjusted by use of the tip-side tapering surface so as to match the axial direction of the alignment portion to the axial direction of the holder body. Alternatively, the position adjustment portion may include a plurality of members contacting the tip-side tapering surface at a plurality of positions.

According to the invention, the attachment-type aligning device may be attached easily such that the axial direction thereof matches the axial direction of the holder body.

This will be described in more detail. When the position adjustment portion provided at the base-side inclining member is put into surface contact with the tip-side tapering surface formed at the tip end of the base shaft insertion hole of the holder body, the position of the position adjustment portion is adjusted such that the axial direction of the attachment-type aligning device matches the axial direction of the holder body. Therefore, the attachment-type aligning device may be attached easily such that the axial direction thereof matches the axial direction of the holder body. As a result, the base shaft may be aligned to the base shaft holder with high precision.

In an embodiment of the invention, the attachment member may be at least partially formed of a magnet magnetically attractable to the holder body, which is formed of a magnetic metal material.

The expression "at least partially formed of a magnet" refers to that the attachment member may be entirely formed of a magnet, the attachment member may be partially magnetized, or a magnet as a separate component may be assembled with a member that forms the attachment member.

According to the invention, the attachment-type aligning device may be detachably attached easily to the holder body, which is formed of a magnetic metal material.

This will be described in more detail. As compared with, for example, in the case where a screw portion such as a screw ridge or the like is provided in an attachment member of an attachment-type aligning device to attach or detach the attachment-type aligning device to or from the holder body by screwing or unscrewing, the attachment-type aligning device may be attached to the holder body more easily by the magnetic force of the magnet used to form at least a part of the attachment member. In addition, the attachment-type aligning device may be detached easily from the holder body. Namely, the attachment-type aligning device may be attached or detached easily to or from the holder body.

There may be a case where a screw portion such as a screw ridge or the like is provided in the attachment member of the attachment-type aligning device in order to detachably attach the attachment-type aligning device to the holder body by screwing as described above, but the holder body of the base shaft holder in use includes no screw portion. In this case, a screw portion needs to be provided in the holder body. By contrast, according to the present invention, the attachment-type aligning device is attached easily to the holder body by the magnetic force of the magnet used to form at least a part of the attachment member. Therefore, as long as the holder body is formed of a magnetic metal material, the attachment-type aligning device may be attached or detached easily to or from the base shaft holder in use with no need to process the base shaft holder.

In an embodiment of the invention, the attachment member formed of the magnet may include a facing portion facing a tip surface of the holder body, and the attachment-type aligning device may include a diametrically outer member formed of a magnetic metal material and bridging over a border between the attachment member and the holder body on a diametrically outer side.

The diametrically outer member bridging over the border between the attachment member and the holder body on the diametrically outer side may perform the bridging while directly contacting outer circumferential surfaces of the attachment member and the holder body. Alternatively, a separate member formed of a magnetic material may be provided between the diametrically outer member and the attachment member or between the diametrically outer member and the holder body, and the diametrically outer member may perform the bridging while such a separate member is located as described above.

According to the invention, the attachment member formed of a magnet is caused to be magnetically attracted to the holder body. Therefore, the attachment-type aligning device may be detachably attached easily to the holder body. In addition, the diametrically outer member is provided to bridge over the border between the attachment member and the holder body on the diametrically outer side. Therefore, a magnetic circuit may be formed of the attachment member, the holder body and the diametrically outer member. For this reason, the attachment member may be attached to the holder body more firmly than by mere use of a magnetic force.

The facing portion of the attachment member formed of a magnet is caused to face the tip surface, so that the facing portion is magnetically attracted to the holder body. As a result, an area size of a contact area where the attachment member and the holder body contact each other is increased. Therefore, the attachment-type aligning device may be attached more stably to, and secured more firmly to, the holder body.

In addition, the attachment member, the holder body, and the diametrically outer member form a magnetic circuit. Therefore, the base shaft formed of a magnetic metal material is not inadvertently attracted magnetically, and thus the ease of handling may be improved.

In an embodiment of the invention, the alignment portion may include an alignment member contacting, in at least three directions, the base shaft inserted into the through-hole to align the base shaft.

According to the invention, the alignment member contacts the base shaft in at least three directions and thus may align the base shaft with high precision.

The alignment member contacting the base shaft in at least three directions to align the base shaft may be as follows: a plurality of alignment members such as rolling elements, for example, spheres, rollers or the like may contact the base shaft in at least three directions for alignment; or a single alignment member may contact the base shaft at least at three positions thereof in at least three directions for alignment. It is preferred that the "at least three directions" are provided with a generally equal interval therebetween in a circumferential direction. In the case where, for example, the base shaft has a hexagonal cross-section, it is preferred that the base shaft is contacted in three directions or six directions.

In an embodiment of the invention, the attachment-type aligning device may further include an inclining member having an inclining surface inclining with respect to the axial direction in such a direction as to guide, diametrically inward in the through-hole, the alignment member in contact with the inclining member, and also include an urging portion urging the alignment member in contact therewith toward the inclining surface inclining with respect to the axial direction in such a direction as to guide the alignment member diametrically inward in the through-hole.

The inclining surface may be a curved surface, a flat surface, or an assembly thereof as long as inclining with respect to the axial direction in such a direction as to guide, diametrically inward in the base shaft insertion hole, the alignment member in contact therewith.

The urging portion urging the alignment member and the inclining surface in such a direction as to cause the alignment member and the inclining surface to approach each other may directly contact the alignment member for urging. Alternatively, the urging portion may contact a ring-shaped retaining member, described below, retaining the interval between the plurality of alignment members in the circumferential direction and having an axial-direction through-hole extending therethrough in the axial direction, and may provide an urging force via the retaining member.

According to the invention, the base shaft held by the base shaft holder is aligned, and thus the rotary jig may be prevented from vibrating while rotating.

This will be described in more detail. The alignment member urged by the urging portion contacts the inclining surface provided at the inclining member. As a result, the alignment member moves diametrically inward by the inclining surface, or the urging force of the urging portion acts diametrically inward via the alignment member. Therefore, the alignment member may contact the base shaft, inserted into the base shaft insertion hole of the holder body, in at least three directions and thus align the base shaft. For this reason, the base shaft held by the base shaft holder is aligned, and thus the rotary jig may be prevented more certainly from vibrating while rotating.

In an embodiment of the invention, the alignment member may be a tip-side alignment member aligning the base shaft on a tip side in the axial direction, and a base-side alignment member aligning the base shaft on a base side in the axial direction. The inclining surface may be a tip-side inclining surface guiding, diametrically inward, the tip-side alignment member in contact wherewith, and a base-side inclining surface guiding, diametrically inward, the base-side alignment member in contact wherewith. The inclining member may be a tip-side inclining member having the tip-side inclining surface, and a base-side inclining member having the base-side inclining surface. The urging portion may be located between the tip-side alignment member and the base-side alignment member in the axial direction, and may be structured to urge the tip-side alignment member and the base-side alignment member in such a direction as to separate the tip-side alignment member and the base-side alignment member from each other in the axial direction.

According to the invention, the tip-side alignment member and the base-side alignment member each align the base shaft, namely, the base shaft is aligned at two positions in the axial direction. Therefore, the base shaft may be aligned with higher precision.

As the alignment member, the tip-side alignment member is provided to align the base shaft on the tip side in the axial direction, and also the base-side alignment member is provided to align the base shaft on the base side in the axial direction. As the inclining surface, the tip-side inclining surface is provided to guide, diametrically inward, the tip-side alignment member in contact wherewith, and also the base-side inclining surface is provided to guide, diametrically inward, the base-side alignment member in contact wherewith. Therefore, the urging portion, urging the alignment member and the inclining surface in such a direction as to cause the alignment member and the inclining surface to approach each other, urges the tip-side alignment member and the tip-side inclining surface in such a direction as to cause the tip-side alignment member and the tip-side inclining surface to approach each other, and also urges the base-side alignment member and the base-side inclining surface in such a direction as to cause the base-side alignment member and the base-side inclining surface to approach each other.

As described above, the urging portion urges the tip-side alignment member and the tip-side inclining surface in such a direction as to cause the tip-side alignment member and the tip-side inclining surface to approach each other, and also urges the base-side alignment member and the base-side inclining surface in such a direction as to cause the base-side alignment member and the base-side inclining surface to approach each other. Therefore, a single urging portion may urge the tip-side alignment member and the tip-side inclining surface in such a direction as to cause the tip-side alignment member and the tip-side inclining surface to approach each other, and also urge the base-side alignment member and the base-side inclining surface in such a direction as to cause the base-side alignment member and the base-side inclining surface to approach each other. Alternatively, an urging portion may be provided to urge the tip-side alignment member and the tip-side inclining surface in such a direction as to cause the tip-side alignment member and the tip-side inclining surface to approach each other, and another urging portion may be provided to urge the base-side alignment member and the base-side inclining surface in such a direction as to cause the base-side alignment member and the base-side inclining surface to approach each other.

The base-side alignment member and the base-side inclining surface may incline in the opposite directions from each other or in the same direction as each other. The base-side alignment member and the base-side inclining surface may incline at different inclination angles from each other or at the same inclination angle as each other.

In an embodiment of the invention, a tip-side reverse inclining contact member may be provided to be located between the tip-side alignment member and the urging portion, to incline with respect to the axial direction in a direction opposite to that of the tip-side inclining surface, and to have a tip-side reverse inclining surface in contact with the tip-side alignment member. A base-side reverse inclining contact member may be provided to be located between the base-side alignment member and the urging portion, to incline with respect to the axial direction in a direction opposite to that of the base-side inclining surface, and to have a base-side reverse inclining surface in contact with the base-side alignment member.

In this case, the urging force of the urging portion may be divided into a component acting in such a direction as to urge the tip-side alignment member toward the tip-side inclining surface and a component acting in the diametrical direction so as to cause the tip-side alignment member to contact the base shaft, and also divided into a component acting in such a direction as to urge the base-side alignment member toward the base-side inclining surface and a component acting in the diametrical direction so as to cause the base-side alignment member to contact the base shaft. For this reason, even if a diametrically outward force acts on the tip-side alignment member or the base-side alignment member from the base side, such a force may be counteracted by the urging force of the urging portion.

An outer circumferential surface of the tip-side alignment member contacting and aligning the base shaft is restricted by the tip-side inclining surface and the tip-side reverse inclining surface provided to expand diametrically inward as seen in a cross-sectional view taken along the axial direction, in the state where the urging force of the urging portion acts on the tip-side alignment member. An outer circumferential surface of the base-side alignment member in an aligning state is restricted by the base-side inclining surface and the base-side reverse inclining surface provided to expand diametrically inward as seen in a cross-sectional view taken along the axial direction, in the state where the urging force of the urging portion acts on the base-side alignment member. Therefore, even if a diametrically outward force acts on the alignment member from the base side, such a force may be counteracted by the urging force of the urging portion.

For this reason, the base shaft held by the base shaft holder is aligned, and thus the rotary jig may be prevented certainly from vibrating while rotating.

In an embodiment of the invention, the attachment-type aligning device may further include a ring-shaped retaining member retaining an interval between the plurality of alignment members in a circumferential direction and having an axial-direction through-hole extending therethrough in the axial direction. The axial-direction through-hole may be a part of the through-hole.

According to the invention, the base shaft may be aligned with high precision and held in the through-hole, which includes the axial-direction through-hole of the retaining member. Namely, the base shaft held by the base shaft holder is aligned, and thus the rotary jig may be prevented more certainly from vibrating while rotating.

In addition, since the plurality of alignment members are retained by the ring-shaped retaining member, the alignment portion is assembled while the interval between the alignment members in the circumferential direction is retained. Thus, the ease of assembly of the attachment-type aligning device including the alignment portion may be improved.

The present invention is also directed to an electric tool including a driving device; a rotation transmission portion transmitting a rotation force of the driving device onto the center of a rotational axis thereof; and the base shaft holder having the attachment-type aligning device.

According to the invention, the base shaft is aligned, and thus the rotary jig may be rotated with no vibration.

The electric tool may be any electric tool that allows a rotary jig such as a screwdriver bit, a drill bit or the like to be attached thereto and is capable of rotating such a rotary jig, and may be, for example, an electric screwdriver, an impact screwdriver or the like.

### ADVANTAGEOUS EFFECTS OF INVENTION

The present invention provides an attachment-type aligning device capable of aligning a base shaft held by a base shaft holder to prevent a vibration (runout) of a rotary jig during a rotation thereof, and also provides an electric screwdriver including such a base shaft holder having the attachment-type aligning device attached thereto.

### BRIEF DESCRIPTION OF DRAWINGS

[FIG. 1] FIG. 1 is a front view of an electric tool including a base shaft holder having an alignment adaptor attached thereto.
[FIG. 2] FIG. 2 is a perspective view of the base shaft holder having the alignment adaptor attached thereto.
[FIG. 3] FIG. 3 is a perspective view of the base shaft holder before the alignment adaptor is attached thereto.
[FIG. 4] is an exploded view showing front views, rear views, side views and cross-sectional views of elements of the alignment adaptor and the base shaft holder.
[FIG. 5] FIG. 5 is an exploded perspective view of the elements of the alignment adaptor as seen from the side of a front surface thereof.
[FIG. 6] FIG. 6 is an exploded perspective view of the elements of the alignment adaptor as seen from the side of a rear surface thereof.
[FIG. 7] FIG. 7 is a perspective view of the alignment adaptor.
[FIG. 8] FIG. 8 is a vertical cross-sectional view of the base shaft holder having the alignment adaptor attached thereto.
[FIG. 9] FIG. 9 provides views illustrating alignment performed by the alignment adaptor.
[FIG. 10] FIG. 10 provides vertical cross-sectional views of the base shaft holder having the alignment adaptor attached thereto.
[FIG. 11] FIG. 11 is a front view of an electric tool including a base shaft holder having an alignment adaptor in embodiment 2 attached thereto.
[FIG. 12] FIG. 12 is a perspective view of the base shaft holder having the alignment adaptor in embodiment 2 attached thereto.
[FIG. 13] FIG. 13 is a perspective view of the base shaft holder before the alignment adaptor in embodiment 2 is attached thereto.
[FIG. 14] FIG. 14 is an exploded view showing front views, rear views, side views and cross-sectional views of elements of the alignment adaptor in embodiment 2 and the base shaft holder.
[FIG. 15] FIG. 15 is an exploded perspective view of the elements of the alignment adaptor in embodiment 2 as seen from the side of a front surface thereof.
[FIG. 16] FIG. 16 is an exploded perspective view of the elements of the alignment adaptor in embodiment 2 as seen from the side of a rear surface thereof.
[FIG. 17] FIG. 17 is a perspective view of the alignment adaptor in embodiment 2.
[FIG. 18] FIG. 18 is a vertical cross-sectional view of the base shaft holder having the alignment adaptor in embodiment 2 attached thereto.
[FIG. 19] FIG. 19 provides views illustrating alignment performed by the alignment adaptor in embodiment 2.
[FIG. 20] FIG. 20 provides vertical cross-sectional views of the base shaft holder having the alignment adaptor in embodiment 2 attached thereto.

### DESCRIPTION OF EMBODIMENTS

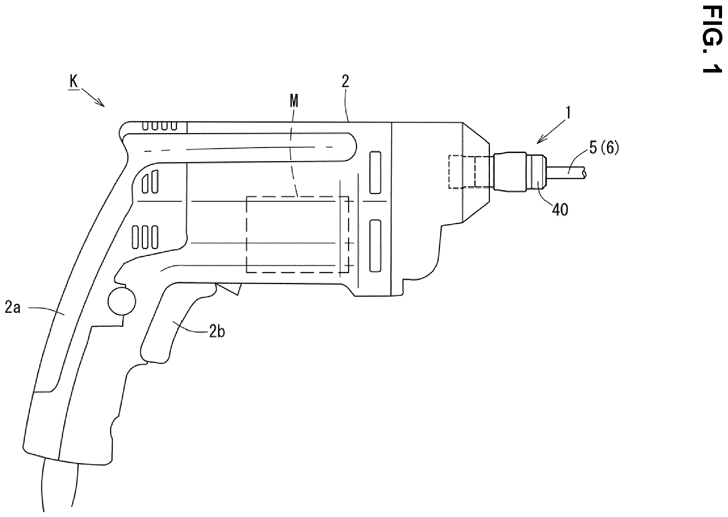

Hereinafter, an embodiment of the present invention will be described in detail with reference to the drawings. With reference to FIG. 1 through FIG. 10, an alignment adaptor 40, a base shaft holder 1 having the alignment adaptor 40 attached thereto, and an electric tool K will be described.

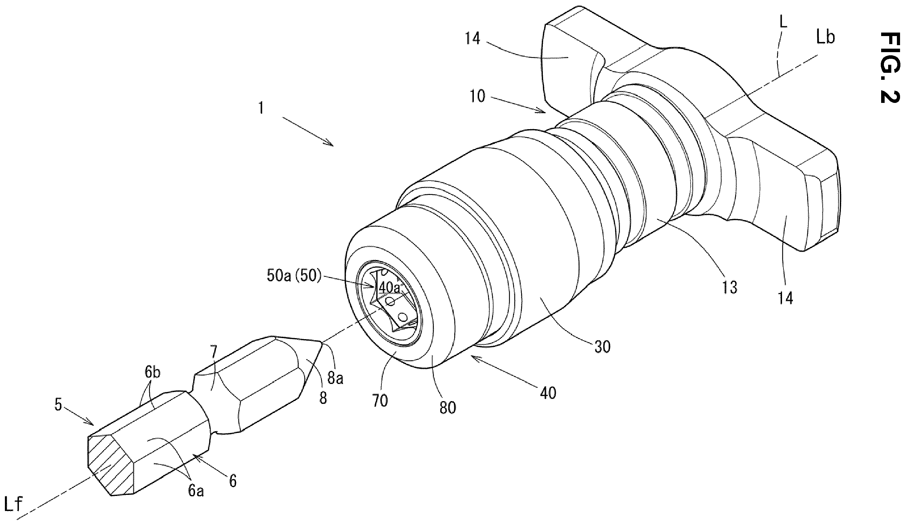

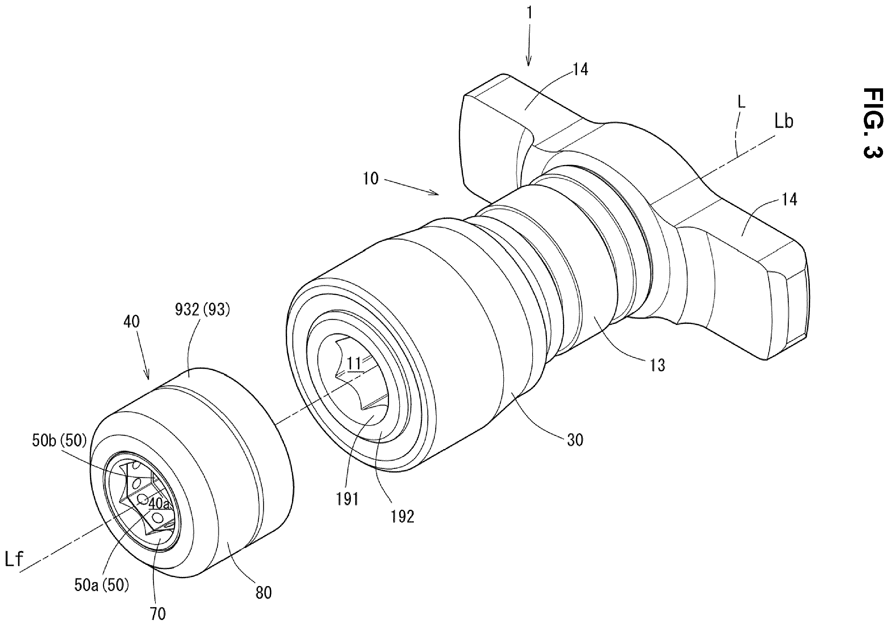

FIG. 1 is a front view of the electric tool K including the base shaft holder 1 having the alignment adaptor 40 attached thereto. FIG. 2 is a perspective view of the base shaft holder 1 having the alignment adaptor 40 attached thereto. FIG. 3 is a perspective view of the base shaft holder 1 before the alignment adaptor 40 is attached thereto.

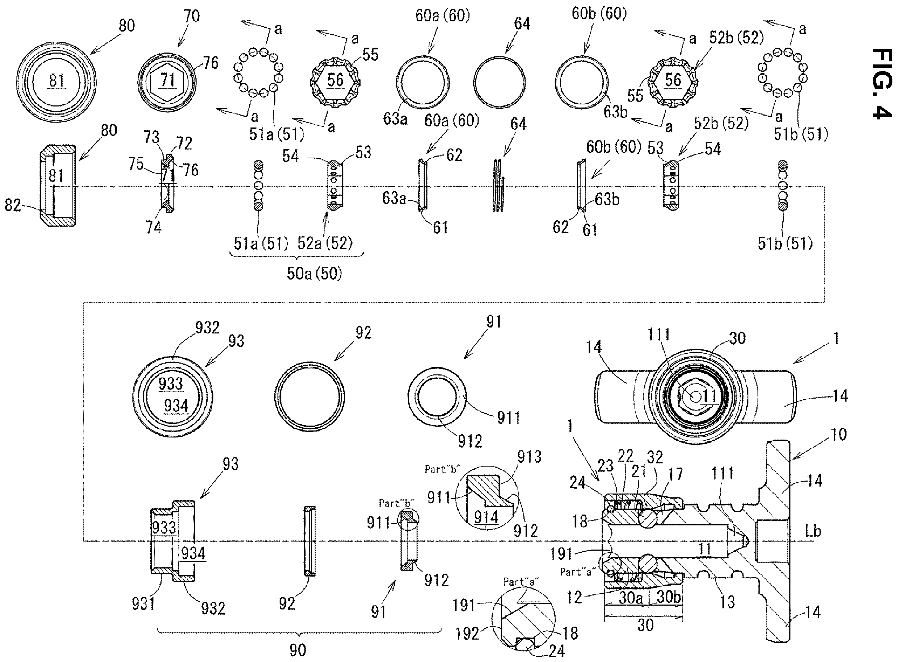

FIG. 4 is an exploded view showing front views, rear views, side views and cross-sectional views of the base shaft holder 1 and the elements of the alignment adaptor 40.

In more detail, FIG. 4 shows vertical cross-sectional views and front views of the base shaft holder 1, an outsert ring 92, a cylindrical accommodation member 93, contact rings 60, alignment balls 51, retainers 52 and a coil spring 64; and vertical cross-sectional views and rear views of a tapering member 91, a tip-side inclining-surface ring 70 and a tip cap 80.

The cross-sectional views of the alignment balls 51 and the retainers 52 included in alignment bearings 50 (50a, 50b) are taken along lines extending through accommodation portions 55 of the retainers 52, which are ring-shaped, namely lines a-a of the front views of the alignment balls 51 and the retainers 52.

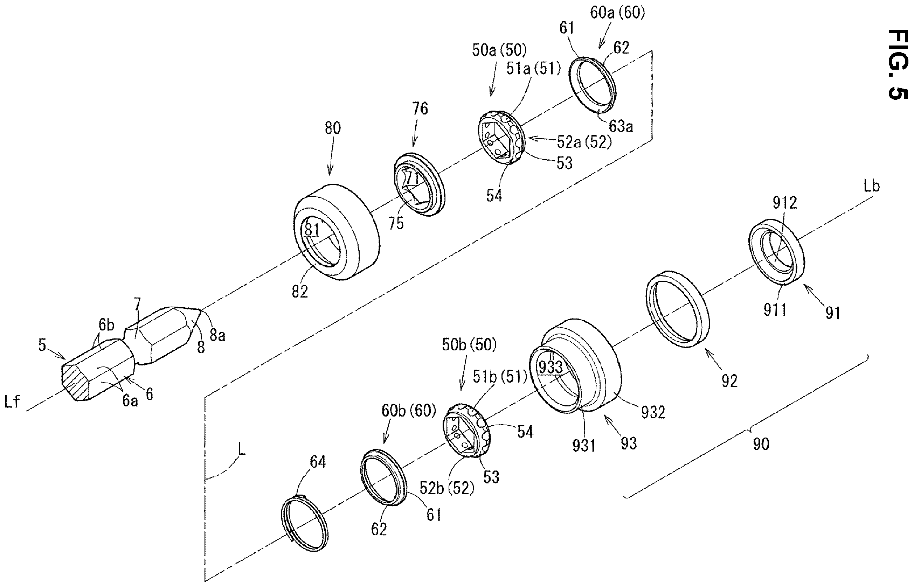

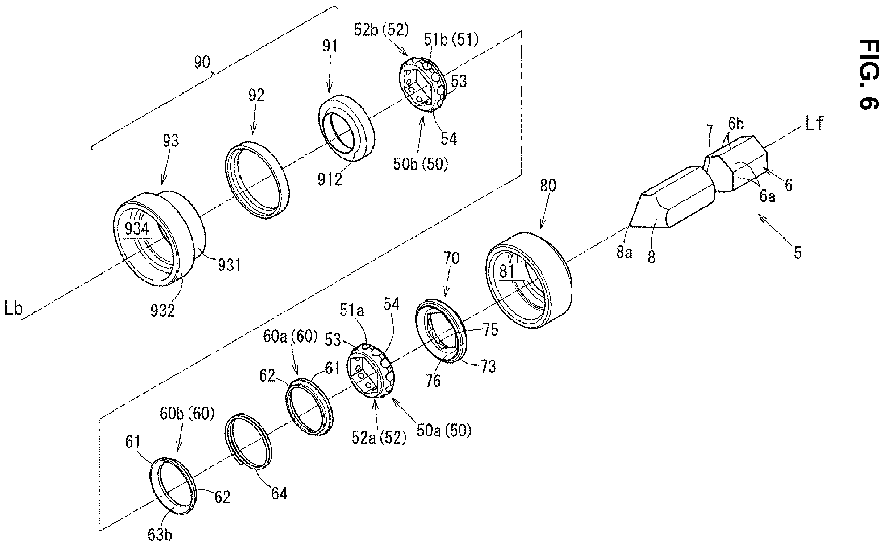

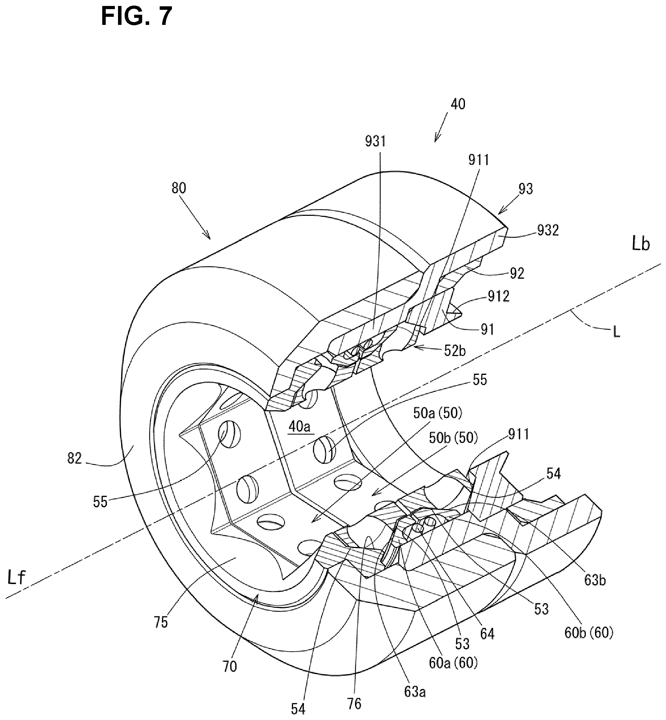

FIG. 5 is an exploded perspective view of the elements of the alignment adaptor 40 as seen from the side of a front surface thereof. FIG. 6 is an exploded perspective view of the elements of the alignment adaptor 40 as seen from the side of a rear surface thereof. FIG. 7 is a perspective view of the alignment adaptor 40. In FIG. 7, the alignment balls 51 are not shown, and a part of the alignment adaptor 40 on the side closer to the viewer of FIG. 7 is cut out.

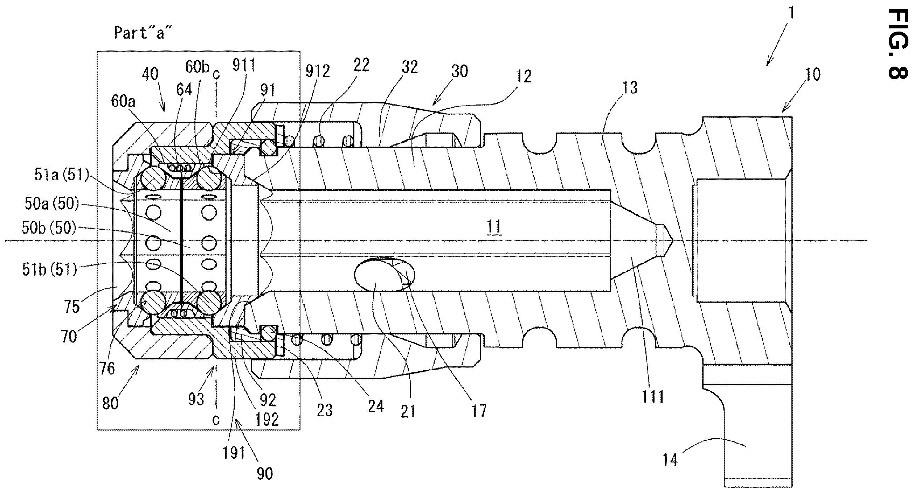

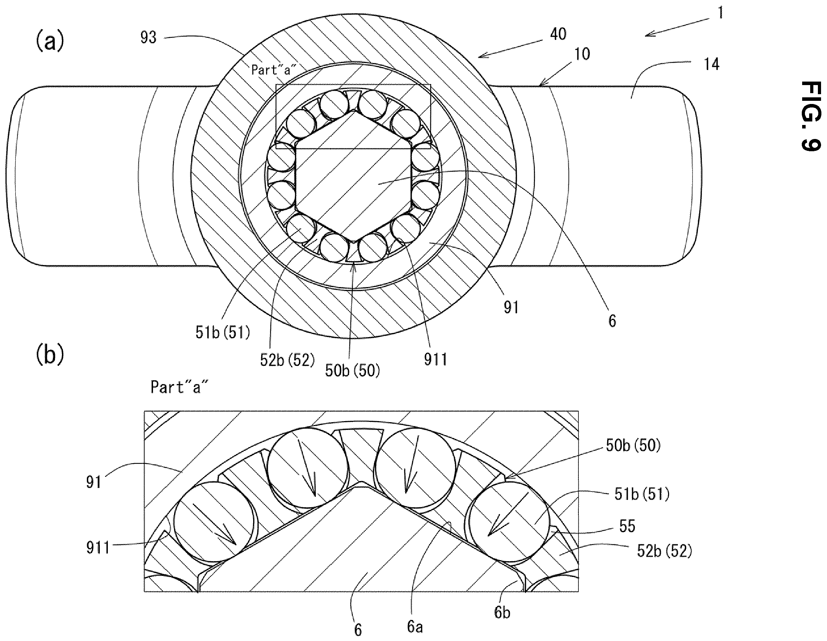

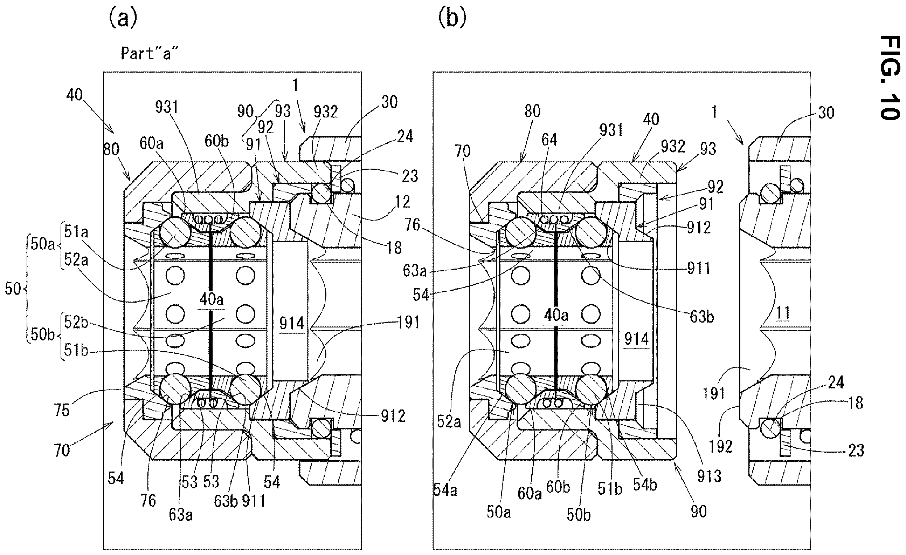

FIG. 8 is a vertical cross-sectional view of the base shaft holder 1 having the alignment adaptor 40 attached thereto. FIG. 9 provides views illustrating alignment performed by the alignment adaptor 40. FIG. 10 provides vertical cross-sectional views of the base shaft holder 1 having the alignment adaptor 40 attached thereto.

In more detail, FIG. 9(a) is a cross-sectional view taken along line c-c in FIG. 8. FIG. 9(b) is an enlarged view of part "a" in FIG. 9(a). FIG. 10(a) is an enlarged view of part "a" in FIG. 8 in the state where the alignment adaptor 40 is attached to a tip end of a short-diameter front body portion 12 of the base shaft holder 1. FIG. 10(b) is an enlarged view of part "a" before the alignment adaptor 40 is attached.

The alignment adaptor 40 according to the present invention is attached to the base shaft holder 1, which is provided at a tip end of the electric tool K, and aligns the rotary jig 5 held by the base shaft holder 1. The electric tool K includes, for example, a housing 2 including a handle 2a to be gripped by a user for use, a motor M located in the housing 2 and rotatable forward and rearward, and a rotation transmission mechanism not shown.

The base shaft holder 1 is located to the front of the housing 2 to hold the base shaft 6 of the rotary jig 5. A trigger 2b located in the handle 2a is operated, so that a rotation driving force of the motor M, which is located in the housing and is rotatable forward and rearward, is transmitted by the rotation transmission mechanism to rotate the base shaft holder 1.

Before describing the base shaft holder 1, the rotary jig 5 to be held by the base shaft holder 1 will be described. As shown in FIG. 2, FIG. 5, FIG. 6 and FIG. 9, the rotary jig 5, such as a screwdriver bit, a drill bit or the like, includes the base shaft 6, which has a hexagonal cross-section on an axial-direction tip side Lf. The rotary jig 5 has an engagement groove 7 formed in a circumferential direction, and the engagement groove 7 is arcked in a vertical cross-section thereof. The base shaft 6 includes a base-side inclining portion 8 on an axial-direction base side Lb, and the base-side inclining portion 8 has a generally conical shape protruding rearward in a tapering-off manner.

The base shaft 6 has flat outer surfaces 6a forming the hexagonal cross-section, and two adjacent flat outer surfaces 6a abut each other along a corner 6b. The base-side inclining portion 8 has an apex 8a on the axial-direction base side Lb. The arcked cross-section of the engagement groove 7 has a diameter slightly longer than a diameter of each of fall-preventive balls 21 described below.

As shown in FIG. 3 and FIG. 4, the base shaft holder 1 included in the electric tool K is an assembly of a holder body 10, which is a main element, the fall-preventive balls 21, a sleeve 30, a sleeve spring 22, a securing ring 23 and a grip ring 24.

The base shaft holder 1 is of a generally used type, and is not limited to having the above-described structure as long as the short-diameter front body portion 12 of the holder body 10 has a position matching inclining surface 191 and a tip surface 192 formed at the tip end thereof. In this embodiment, the position matching inclining surface 191 is named after a function thereof of matching an axial direction L of the alignment adaptor 40 and an axial direction L of the base shaft holder 1 to each other as described below, but is an inclining surface provided to guide the insertion of the base shaft 6 into a base shaft insertion hole 11.

In FIG. 3, the axial-direction base side Lb is the side of the holder body 10 in the axial direction L, which extends through a center of the above-described elements of the base shaft holder 1. The axial-direction tip side Lf is the side on which the position matching inclining surface 191 is formed.

The holder body 10 is generally cylindrical and has the base shaft insertion hole 11 formed therein. The base shaft insertion hole 11 extends in the axial direction L from the axial-direction tip side Lf toward the axial-direction base side Lb. The holder body 10 includes the short-diameter front body portion 12 located on the axial-direction tip side Lf and a long-diameter rear body portion 13 located on the axial-direction base side Lb with respect to the short-diameter front body portion 12. The long-diameter rear body portion 13 includes a flange 14 on the axial-direction base side Lb, and the flange 14 extends in two diametrically outward directions.

The base shaft insertion hole 11 extending through the holder body 10 in the axial direction L from the axial-direction tip side Lf toward the axial-direction base side Lb is a space extending in the axial direction L and being hexagonal as seen from a left side thereof. The base shaft insertion hole 11 includes a tapering space 111 at a base end thereof (right side in FIG. 4), and the tapering space 111 has a diameter decreasing toward, namely, is tapered off toward, the axial-direction base side Lb.

The short-diameter front body portion 12 includes the fall-preventive holes 17 on the axial-direction base side Lb, at two positions with an equal interval in the circumferential direction. The fall-preventive holes 17 communicate a space outer to the holder body 10 and the base shaft insertion hole 11 (described below) to each other in a diametrical direction, and accommodate the fall-preventive balls 21 described below.

The fall-preventive holes 17 are each a through-hole extending in the diametrical direction. The fall-preventive holes 17 accommodate the fall-preventive balls 21 described below such that the fall-preventive balls 21 are movable in the diametrical direction, and also communicate the space outer to the holder body 10 in the diametrical direction and the base shaft insertion hole 11 to each other. The fall-preventive holes 17 are respectively located at two positions facing each other in the circumferential direction. Alternatively, the fall-preventive balls 17 may be located at, for example, three positions at an equal interval.

The fall-preventive holes 17 are each formed to have a diameter slightly longer than the diameter of each of the fall-preventive balls 21 to be accommodated therein, and a stopper (not shown) is located diametrically inner to each of the fall-preventive holes 17 such that the fall-preventive balls 21 accommodated therein do not fall down to the base shaft insertion hole 11. The fall-preventive holes 17 are formed to have a depth shorter than the diameter of each of the fall-preventive balls 21 to be accommodated therein, and thus a diametrically inner portion of each of the accommodated fall-preventive balls 21 is exposed to the base shaft insertion hole 11.

The short-diameter front body portion 12 of the holder body 10 has an engagement groove 18 formed in an outer circumferential surface thereof, and the engagement groove 18 extends in the circumferential direction and is engageable with the grip ring 24 described below.

The short-diameter front body portion 12 has the position matching inclining surface 191 formed in an inner surface of the tip end thereof, and the position matching inclining surface 191 expands like a bell mouth from the axial-direction tip side Lf toward the axial-direction base side Lb. The short-diameter front body portion 12 also has the tip surface 192 formed diametrically outer to the position matching inclining surface 191, and the tip surface 192 extends in a direction perpendicular to the axial direction L.

The sleeve 30 is generally cylindrical and is outserted to the short-diameter front body portion 12 of the holder body 10 from the axial-direction tip side Lf. In more detail, the sleeve 30 includes a front body portion 30a and a rear body portion 30b having a diameter shorter than that of the front body portion 30a. The front body portion 30a and the rear body portion 30b are located in this order in the axial direction L from the axial-direction tip side Lf, and are integrated with each other. The sleeve 30 has a through-space, extending in the axial direction L, formed therein.

The front body portion 30a has an inner diameter slightly longer than an outer diameter of the short-diameter front body portion 12.

The holder body 10 includes a protruding restriction portion 32 provided on an inner surface of a portion between the front body portion 30a and the rear body portion 30b. The protruding restriction portion 32 protrudes diametrically inward as seen in a vertical cross-sectional view thereof and also toward the axial-direction tip side Lf.

The sleeve spring 22 is a so-called coil spring providing an urging force in the axial direction L. The sleeve spring 22 is outserted to the short-diameter front body portion 12 of the holder body 10. The sleeve spring 22 has such a diameter that, when being attached, the sleeve spring 22 is located between the outer circumferential surface of the short-diameter front body portion 12 and an inner circumferential surface of the front body portion 30a of the sleeve 30.

The securing ring 23 is a plate-like ring outserted to the short-diameter front body portion 12. The grip ring 24 is a spring ring that is formed of a linear spring having a part of a circular shape thereof opened and is fitted into the engagement groove 18 provided in the outer circumferential surface of the short-diameter front body portion 12. As seen in a cross-sectional view, the grip ring 24 has a diameter longer than the depth of the engagement groove 18 engaged therewith. In the assembled state, the securing ring 23 closes an accommodation space of the sleeve 30 on the axial-direction tip side Lf.

The base shaft holder 1 including the elements having the above-described structures is assembled as follows. In the state where the fall-preventive balls 21 are accommodated in the fall-preventive holes 17, the sleeve 30 is outserted to the short-diameter front body portion 12, and the sleeve spring 22 is inserted into the sleeve 30 from the axial-direction tip side Lf. In this state, the sleeve spring 22 is located between the short-diameter front body portion 12 and the sleeve 30. The securing ring 23 is attached from the axial-direction tip side , and the grip ring 24 is engaged with the engagement groove 18.

The grip ring 24 is engaged with the engagement groove 18 as described above, so that the securing ring 23 outserted to the short-diameter front body portion 12 is restricted in the movement toward the axial-direction tip side Lf. Thus, the securing ring 23 acts as a reaction force to the sleeve spring 22 on the axial-direction tip side Lf. Therefore, the sleeve 30 is assembled in the state of being urged toward the axial-direction base side Lb by the sleeve spring 22 using the securing ring 23 as a reaction force.

In the base shaft holder 1 including the elements assembled as described above, the protruding restriction portion 32 of the sleeve 30 is located diametrically outer to the fall-preventive balls 21 accommodated in the fall-preventive holes 17. Therefore, the protruding restriction portion 32 may restrict a diametrically outward movement of the fall-preventive balls 21. In this state, even in the case where it is attempted to insert the base shaft 6 of the rotary jig 5 into the base shaft insertion hole 11 from the axial-direction tip side Lf in order to hold the base shaft 6 by the base shaft holder 1, the fall-preventive balls 21 exposed to the base shaft insertion hole 11 contact the base-side inclining portion 8 and as a result, the base shaft 6 cannot be inserted beyond the base-side inclining portion 8.

At this point, the sleeve 30 is first moved toward the axial-direction tip side Lf against the urging force of the sleeve spring 22. As a result, the protruding restriction portion 32 located diametrically outer to the fall-preventive balls 21 also move toward the axial-direction tip side Lf, and thus the fall-preventive balls 21 are allowed to move diametrically outward.

In this state, the base shaft 6 is further moved toward the axial-direction base side Lb. As a result, the base-end inclining portion 8 of the base shaft 6 moves the fall-preventive balls 21 diametrically outward, and thus the base shaft 6 is allowed to be inserted into the base shaft insertion hole 11. At this point, the movement of the sleeve 30 toward the axial-direction tip side Lf is stopped. As a result, the sleeve 30 attempts to move toward the axial-direction base side Lb by the urging force of the sleeve spring 22. However, the sleeve 30 cannot move toward the axial-direction base side Lb because the fall-preventive balls 21 are slid on the flat outer surfaces 6a of the base shaft 6.

When the base shaft 6 is further moved toward the axial-direction base side Lb until the engagement groove 7 reaches the position corresponding to the fall-preventive balls 21, the fall-preventive balls 21 move diametrically inward and are fitted into the engagement groove 7. Along with the diametrically inward movement of the fall-preventive balls 21, the sleeve 30 moves toward the axial-direction base side Lb by the urging force of the sleeve spring 22. As a result, the diametrically outward movement of the fall-preventive balls 21 is restricted by the protruding restriction portion 32. Therefore, the fall-preventive balls 21 is engaged with the engagement groove 7, and thus the base shaft 6 may be prevented from falling out from the base shaft holder 1.

In such a state where the base shaft holder 1 holds the base shaft 6 because the fall-preventive balls 21 is engaged with the engagement groove 7, the base-side inclining portion 8 of the base shaft 6 on the axial-direction base side Lb contacts the tapering space 111 of the base shaft insertion hole 11. Specifically, the base-side inclining portion 8 protruding toward the axial-direction base side Lb contacts a circumferential wall of the tapering space 111, which tapers off toward the axial-direction base side Lb. Therefore, the base-side inclining portion 8, which is an end of the base shaft 6 on the axial-direction base side Lb, may be aligned with respect to a central shaft, of the base shaft holder 1, extending in the axial direction L.

In the case where the rotary jig 5 is used to cause a force to act on the rotary jig 5 (base shaft 6) on the axial-direction base side Lb, the base-side inclining portion 8 is pressed against the circumferential wall of the tapering space 111. Therefore, the rotary jig 5 may further be aligned with respect to the base shaft holder 1 on the axial-direction base side Lb.

The base-side inclining portion 8 is aligned by the tapering space 111. However, if, in the state where the base shaft 6 is inserted or the electric tool K is used, the position at which, or the direction in which, the base shaft 6 is inserted is slightly shifted from the center of rotation, a so-called runout may occur, namely, the rotary jig 5 may vibrate as described above. The reason for this is that the base shaft insertion hole 11 is formed to be slightly larger than the base shaft 6 so as to allow the insertion of the base shaft 6 thereto.

Hereinafter, the alignment adaptor 40 will be described. The alignment adaptor 40 is attached to a tip end of the base shaft holder 1 to perform alignment so as to prevent the possible vibration of the base shaft 6 held by the base shaft holder 1.

As shown in FIG. 4 through FIG. 6, the alignment adaptor 40 is an assembly of the alignment bearings 50 (50a, 50b), the contact rings 60 (60a, 60b), the coil spring 64, the tip-side inclining-surface ring 70, the tip cap 80, and an attachment unit 90.

The alignment bearings 50 included in the alignment adaptor 40 include the plurality of alignment balls 51 and the retainers 52 accommodating the alignment balls 51 to retain the positions of the alignment balls 51 in the circumferential direction. The alignment bearings 50 include the tip-side alignment bearing 50a located on the axial-direction tip side Lf and the base-side alignment bearing 50b located on the axial-direction base side Lb. The retainer 52 included in the tip-side alignment bearing 50a and the retainer 52 included in the base-side alignment bearing 50b are oriented symmetrically to each other in the axial direction L.

The alignment balls 51 included in the alignment bearings 50 (50a, 50b) are steel balls contacting both of two flat outer surfaces 6a, of the base shaft 6, that abut each other while having the corner 6b therebetween. In this embodiment, the base shaft 6 has a hexagonal cross-section, and thus each of the alignment bearings 50 includes 12 alignment balls 51.

Each of the retainers 52 accommodating the plurality of alignment balls 51 to retain the positions thereof includes a generally cylindrical body lying horizontally, and has an axial-direction through-space 56 extending through the cylindrical body in the axial direction L.

The cylindrical body includes accommodation portions 55 located with an equal interval in the circumferential direction. As seen in each of the two parts of the cross-section taken along, for example, line a-a in FIG. 4, the accommodation portion 55 is located at substantially the center in the axial direction L. The cylindrical body also has a first inclining surface 53 and a second inclining surface 54 on both of two sides of each of the accommodation portions 55 in the axial direction L. The first inclining surface 53 and the second inclining surface 54 incline with respect to the axial direction L.

In the assembled state, the first inclining surface 53 faces a tapering surface 63 of each of the contact rings 60 described below, and has an inclination angle corresponding to that of the tapering surface 63. The second inclining surface 54 faces a base-side tapering surface 911 of the alignment unit 90 described below or a tip-side tapering surface 76, and has an inclination angle corresponding to that of the base-side tapering surface 911 or the tip-side tapering surface 76.

The axial-direction through-space 56 extending through the generally cylindrical body in the axial direction L has a hexagonal cross-section as seen in a front view thereof, and is a part of a through-hole 40a described below.

The accommodation portions 55 are each a cylindrical through-hole extending through the cylindrical body in the diametrical direction. The accommodation portion 55 has a diameter corresponding to that of the alignment ball 51 to be accommodated therein, and is provided with a stopper (not shown) that prevents the alignment ball 51, to be accommodated therein, from falling out.

The cylindrical body has a generally hat-shaped cross-section and is longer in the axial direction L than in the thickness (diametrical) direction. The accommodation portion 55 is located between the first inclining surface 53 and the second inclining surface 54 of the cylindrical body. The accommodation portion 55 is provided in the number of 12 in total in each of the alignment adaptor bearings 50. The 12 accommodation portions 55 corresponds to the 12 alignment balls 51, and are provided on both of two sides of the corners of the axial-direction through-space 56, which is hexagonal.

The retainers 52 having such a structure are located such that the retainer 52 included in the tip-side alignment bearing 50a and the retainer 52 included in the base-side alignment bearing 50b are oriented symmetrically to each other in the axial direction L.

This will be described in more detail. The retainer 52 included in the tip-side alignment bearing 50a is oriented such that the first inclining surface 53 is on the axial-direction base side Lb and the second inclining surface 54 is on the axial-direction tip side Lf. By contrast, the retainer 52 included in the base-side alignment bearing 50b is oriented such that the second inclining surface 54 is on the axial-direction base side Lb and the first inclining surface 53 is on the axial-direction tip side Lf.

Each of the contact rings 60 is a generally cylindrical member including an outserting cylindrical portion 61 outserted to the first inclining surface 53 of the retainer 52 included in the alignment bearing 50, and an outserted cylindrical portion 62 outserted by the coil spring 64. The outserting cylindrical portion 61 and the outserted cylindrical portion 62 are integrated with each other.

At an inner surface of the outserting cylindrical portion 61, the tapering surface 63 is formed. The tapering surface 63 inclines with respect to the axial-direction L on the axial-direction tip side Lf and with respect to the diametrical direction, and expands like a bell mouth toward the retainer 52. The tapering surface 63 inclines, as seen in a vertical cross-sectional view thereof, at an inclination angle generally equal to that of the base-side tapering surface 911 formed at the tapering member 91.

The contact rings 60 having such a structure include the tip-side contact ring 60a located on the axial-direction tip side Lf and the base-side contact ring 60b located on the axial-direction base side Lb. The tip-side contact ring 60a and the base-side contact ring 60b are oriented symmetrically to each other in the axial direction L.

This will be described in more detail. The tip-side contact ring 60a is oriented such that a tapering surface 63a thereof is on the axial-direction tip side Lf, whereas the base-side contact ring 60b is oriented such that a tapering surface 63b thereof is on the axial-direction base side Lb.

The coil spring 64 provides an urging force in the axial direction L, and is outserted to the outserted cylindrical portions 62 of the contact rings 60.

The tip-side inclining-surface ring 70 is generally ring-shaped, is attached to the tip end of the short-diameter front body portion 12 of the holder body 10, and has a through-hole 71 extending therethrough in the axial direction L and being hexagonal as seen in a front view thereof.

This will be described in more detail. The tip-side inclining-surface ring 70 includes a ring-shaped cylindrical body 72. The cylindrical body 72 has an outserted groove 73 formed in an outer circumferential surface thereof on the axial-direction tip side Lf. The outserted groove 73 is outserted by the tip cap 80 described below. The tip-side inclining-surface ring 70 also includes a diametrically inward protrusion portion 74 provided on the axial-direction tip side Lf. The diametrically inward protrusion portion 74 protrudes inward in the diametrical direction and extends to about a middle point of the tip-side inclining-surface ring 70 in the axial direction L.

The inward protrusion portion 74 has a guide tapering surface 75 expanding like a bell mouth toward the axial-direction tip side Lf. The tip-side inclining-surface ring 70 also has a tip-side tapering surface 76 on the axial-direction base side Lb. The tip-side tapering surface 76 has a diameter longer than that of the guide tapering surface 75 and expands like a bell mouth toward the axial-direction base side Lb.

As seen in a vertical cross-sectional view, the tip-side tapering surface 76 inclines in a direction opposite to that of the base-side tapering surface 911 formed at the tapering member 91 described below, but at an inclination angle generally equal to that of the base-side tapering surface 911.

As shown in FIG. 4 through FIG. 8, the tip cap 80 is a cylindrical member that is outserted to a short-diameter cylindrical portion 931 of the cylindrical accommodation member 93 of the attachment unit 90 described below to be integrated with the attachment unit 90. The tip cap 80 is also a bottomed cylindrical member lying horizontally. The tip cap 80 has an opening at a tip end thereof on the axial-direction tip side Lf, and the opening communicates with an inner through-space 81 extending through the tip cap 80 in the axial direction L. The opening is formed by a diametrically inward restriction protrusion 82 protruding diametrically inward.

The attachment unit 90 is provided to attach the alignment adaptor 40 to the tip end of the short-diameter front body portion 12 of the base shaft holder 1, and includes the tapering member 91, the outsert ring 92, and the cylindrical accommodation member 93 located in this order from the axial-direction base side Lb. The tapering member 91 has the base-side tapering surface 911 and a position adjustment tapering surface 912. The outsert ring 92 is outserted to the tip end of the short-diameter front body portion 12 on the axial-direction base side Lb. The cylindrical accommodation member 93 is outserted to the tapering member 91 and the outsert ring 92 attached to the tip end of the short-diameter front body portion 12, and accommodates the alignment bearings 50, the contact rings 60 and the coil spring 64.

The tapering member 91 is generally ring-shaped, and has a through-hole 914 extending therethrough in the axial direction L. The through-hole 914 is formed at a center of the tapering member 91 as seen in a front view thereof. The tapering member 91 has the base-side tapering surface 911 formed on the front side of the through-hole 914. The base-side tapering surface 911 expands like a bell mouth toward the axial-direction tip side Lf.

On the axial-direction base side Lb of the tapering member 91, the position adjustment tapering surface 912 is formed around the through-hole 914 and protrudes toward the axial-direction base side Lb. A flat contact surface 913 facing the tip surface 192 in the attached state is formed diametrically outer to, and on the axial-direction tip side Lf of, the position adjustment tapering surface 912 of the tapering member 91.

The position adjustment tapering surface 912 is a tapering protrusion, and the position thereof is to be adjusted by use of the position matching inclining surface 191 so as to match the alignment direction L of the alignment adaptor 40 to the alignment direction L of the base shaft holder 1. This will be described in more detail. In the state of being attached to the base shaft holder 1, the position adjustment tapering surface 912 faces the position matching inclining surface 191 formed in the inner surface of the tip end of the short-diameter front body portion 12. The position adjustment tapering surface 912 is tapering at an inclination angle generally equal to that of the position matching inclining surface 191.

The tapering member 91 is formed of a magnet magnetically attractable to the base shaft holder 1, which is formed of a magnetic metal material. Therefore, the tapering member 91 may be magnetically attracted to the tip end of the short-diameter front body portion 12 of the base shaft holder 1.

The tapering member 91 is formed of a magnet in which a magnetic pole is generated on each of the diametrically inner side and the diametrically outer side. As long as a flat surface of the tapering member 91 on the axial-direction base side Lb and a diametrically outer portion, of the tapering member 91, that has a quadrangular cross-section are formed of a magnet, the remaining portion of the tapering member 91 may entirely be formed of a magnetic metal material.

The outsert ring 92 is outserted to, and bridging over a border between, a portion on the axial-direction base side Lb of the tapering member 91 and the tip end of the short-diameter front body portion 12. The outsert ring 92 has such a length that an end thereof on the axial-direction base side Lb contacts the grip ring 24 engaged with the fall-preventive holes 17 formed in the outer circumferential surface of the short-diameter front body portion 12.

The outsert ring 92 faces, in the diametrical direction, a diametrically outer surface of the tapering member 91, and is formed of a magnetic metal material. The diametrically outer surface of the tapering member 91 acts as one of the two magnetic poles of the tapering member 91.

The cylindrical accommodation member 93 includes a long-diameter cylindrical portion 932 provided on the axial-direction base side Lb and also includes the short-diameter cylindrical portion 931 having a diameter shorter than that of the long-diameter cylindrical portion 932 and protruding from the long-diameter cylindrical portion 932 toward the axial-direction tip side Lf. The cylindrical accommodation member 93 has through-spaces 933 and 934 extending therethrough in the axial direction L.

The long-diameter cylindrical portion 932 is outserted to the outsert ring 92 and the cylindrical accommodation member 93 attached to the tip end of the short-diameter front body portion 12 of the base shaft holder 1. The through-space 933 in the short-diameter cylindrical portion 931 accommodates the alignment bearings 50, the contact rings 60 and the coil spring 64 in the state where the base-side tapering surface 911 of the tapering member 91 is exposed to the through-space 933.

The long-diameter cylindrical portion 932 is formed to have such a length that an end thereof on the axial-direction base side Lb contacts the securing ring 23 outserted to the short-diameter front body portion 12. The cylindrical accommodation member 93 faces, in the diametrical direction, an end on the axial-direction tip side Lf of the diametrically outer surface of the tapering member 91, and is formed of a magnetic metal material. The diametrically outer surface of the tapering member 91 acts as one of the two magnetic poles of the tapering member 91.

In the assembled state, the short-diameter cylindrical portion 931 is outserted by the tip cap 80 and is integrated therewith. The cylindrical accommodation member 93 and the tip cap 80 may be assembled and integrated with each other by adhesion. Alternatively, the cylindrical accommodation member 93 and the tip cap 80 may be assembled as follows. A thread ridge is formed on an outer circumferential surface of the short-diameter cylindrical portion 931 and a thread groove is formed in an inner surface of the tip cap 80, and the thread ridge of the short-diameter cylindrical portion 931 and the thread groove of the tip cap 80 are screwed to integrate the cylindrical accommodation member 93 and the tip cap 80 with each other.

The attachment unit 90, of the alignment adaptor 40, including the elements having the above-described structures is assembled as follows. The outsert ring 92 is outserted to the tapering member 91, and the cylindrical accommodation member 93 is attached to the tapering member 91 and the outsert ring 92 from the axial-direction tip side Lf. In this state, the tapering member 91 and the outsert ring 92 are accommodated in the through-space 934 of the cylindrical accommodation member 93.

The outsert ring 92 and the cylindrical accommodation member 93 formed of a magnetic metal material are magnetically attracted to, and thus is integrated with, the tapering member 91 formed of a magnet. In such an assembled state, on the axial-direction base side Lb of the through-space 933 of the cylindrical accommodation member 93, the base-side tapering surface 911 of the tapering member 91 is exposed toward the axial-direction tip side Lf.

The outsert ring 92 and the cylindrical accommodation member 93 are assembled to bridge over a border between the tapering member 91 and the tip end of the short-diameter front body portion 12 and to be provided on the outer circumferential surfaces thereof.

The alignment adaptor 40 including the elements having the above-described structures is assembled as follows. First, the alignment balls 51 are accommodated in the accommodation portions 55 of the retainers 52 to form the alignment bearings 50 (50a, 50b).

The coil spring 64 is outserted to the outserted cylindrical portions 62 of the contact rings 60.

This will be described in more detail. The coil spring 64 is outserted, from the axial-direction base side Lb, to the outserted cylindrical portion 62 of the tip-side contact ring 60a oriented such that tapering surface 63a is located on the axial-direction tip side Lf. The coil spring 64 is outserted, from the axial-direction tip side Lf, to the outserted cylindrical portion 62 of the base-side contact ring 60b oriented such that tapering surface 63b is located on the axial-direction base side Lb. In this step, the tip-side contact ring 60a and the base-side contact ring 60b may be integrated with each other by an adhesive tool such as a cushioning two-sided adhesive tape.

In this state, the contact rings 60 are outserted to the retainers 52 included in the alignment bearings 50. This will be described in more detail. The tip-side contact ring 60a oriented such that the tapering surface 63a is located on the axial-direction tip side Lf is outserted to the first inclining surface 53 of the retainer 52, of the tip-side alignment bearing 50a, oriented such that the first inclining surface 53 is located on the axial-direction base side Lb. The base-side contact ring 60b oriented such that the tapering surface 63b is located on the axial-direction base side Lb is outserted to the first inclining surface 53 of the retainer 52, of the base-side alignment bearing 50b, oriented such that the first inclining surface 53 is located on the axial-direction tip side Lf.

The resultant assembly of the alignment bearings 50, the contact rings 60 and the coil spring 64 is accommodated in the through-space 933 of the cylindrical accommodation member 93 from the axial-direction tip side Lf. In this step, the second inclining surface 54 of the base-side alignment bearing 50b is assembled so as to face the base-side tapering surface 911 exposed toward the axial-direction tip side Lf from the axial-direction base side Lb in the through-space 933.

The tip-side inclining-surface ring 70 is attached, from the axial-direction tip side Lf, to the assembly of the alignment bearings 50, the contact rings 60 and the coil spring 64 accommodated in the through-space 933 of the cylindrical accommodation member 93. The tip cap 80 is attached to the cylindrical accommodation member 93 from the axial-direction tip side Lf to be integrated therewith. Thus, the alignment adaptor 40 is assembled.

As described above, in the alignment adaptor 40 assembled in this manner, the base-side tapering surface 911 and the second inclining surface 54 of the base-side alignment bearing 50b face each other on the axial-direction base side Lb of the through-space 933. In addition, in the alignment adaptor 40, the first inclining surface 53 of the tip-side alignment bearing 50a faces the tip-side tapering surface 76 of the tip-side inclining-surface ring 70.

As shown in FIG. 7, in the alignment adaptor 40 having the above-described structure, the through-hole 40a extending therethrough in the axial direction L is formed of the through-hole 71 of the tip-side inclining-surface ring 70, the axial-direction through-spaces 56 of the retainers 52 included in the alignment bearings 50, and the through-hole 914 of the tapering member 91 included in the attachment unit 90.

As described below, the alignment adaptor 40 assembled in the above-described manner may be attached to the tip end of the base shaft holder 1.

Specifically, the alignment adaptor 40 is attached to the tip end of the base shaft holder 1 as follows. The position adjustment tapering surface 912 of the tapering member 91 included in the attachment unit 90 of the alignment adaptor 40 is put into surface contact with the position matching inclining surface 191 formed at the inner surface of the tip end of the short-diameter front body portion 12.

At this point, since the position adjustment tapering surface 912 is put into surface contact with the position matching inclining surface 191, the position of the alignment adaptor 40 with respect to the base shaft holder 1 may be adjusted such that the axial direction of the alignment adaptor 40 matches the axial direction L of the base shaft holder 1.

The alignment adaptor 40 is attached to the short-diameter front body portion 12 of the base shaft holder 1 such that the axial direction of the alignment adaptor 40 is matched to the axial direction L of the base shaft holder 1 by the position matching inclining surface 191 and the position adjustment tapering surface 912. In the alignment adaptor 40, as shown in FIG. 10(b), a flat contact surface 913 on the axial-direction base side Lb of the tapering member 91 formed of a magnet is in surface contact with the tip surface 192 of the short-diameter front body portion 12. An inclining surface and an inner surface, on the axial-direction base side Lb, of the outsert ring 92 outserted to the tapering member 91 are in surface contact with an inclining tip surface and a tip outer circumferential surface of the tip end of the short-diameter front body portion 12 on the axial-direction tip side Lf. In addition, a portion, on the axial-direction base side Lb, of the cylindrical accommodation member 93 outserted to, and bridging over a border between, a portion on the axial-direction tip side Lf of the tapering member 91 and the outsert ring 92 is in contact with the securing ring 23 outserted to the short-diameter front body portion 12.

Therefore, as shown in FIG. 10(a), a magnetic circuit is formed of the tapering member 91, the outsert ring 92, the cylindrical accommodation member 93, the short-diameter front body portion 12 and the securing ring 23. The alignment adaptor 40 may be secured stably and firmly to the short-diameter front body portion 12 of the base shaft holder 1.

The through-hole 40a of the alignment adaptor 40 attached to a tip end of the holder body 10 on the axial-direction tip side Lf as described above, and the base shaft insertion hole 11 of the holder body 10, communicate with each other.

With reference to FIG. 7 through FIG. 11, alignment of the base shaft 6 of the rotary jig 5 (base shaft 6) inside the alignment adaptor 40 attached to the base shaft holder 1 as described above will be described.

As shown in FIG. 10(a), the base shaft 6 is inserted , from the axial-direction tip side Lf, into the through-hole 40a of the alignment adaptor 40 attached to the base shaft holder 1 on the axial-direction tip side Lf. When the base shaft 6 is inserted in this manner, the base-side inclining portion 8 of the base shaft 6 contacts diametrically inner portions of the alignment balls 51 accommodated in the accommodation portions 55 of the alignment bearings 50.

When the base-side inclining portion 8 of the base shaft 6 is further inserted, the base-side inclining portion 8 contacts the alignment balls 51. At this point, the alignment balls 51 of the tip-side alignment bearing 50a contact at least one of the tip-side tapering surface 76 of the tip-side inclining-surface ring 70 and the tapering surface 63a of the tip-side contact ring 60a. The alignment balls 51 of the base-side alignment bearing 50b contact at least one of the tapering surface 63b of the base-side contact ring 60b and the base-side tapering surface 911.

When the base shaft 6 is further inserted, the alignment balls 51 go beyond the base-side inclining portion 8 to contact the flat outer surfaces 6a of the base shaft 6. When this occurs, as shown in FIG. 10(a), which is an enlarged view of part "a" in FIG. 8, diametrically outer portions of the alignment balls 51 of the tip-side alignment bearing 50a certainly contact both of the tip-side tapering surface 76 of the tip-side inclining-surface ring 70 and the tapering surface 63a of the tip-side contact ring 60a. Diametrically outer portions of the alignment balls 51 of the base-side alignment bearing 50b certainly contact both of the tapering surface 63b of the base-side contact ring 60b and the base-side tapering surface 911.

In this state, the tip-side tapering surface 76 is secured to the holder body 10. Therefore, the tip-side contact ring 60a having the tapering surface 63a moves toward the axial-direction tip side Lf against the urging force of the coil spring 64. In addition, ends, on the axial-direction tip side Lf, of the diametrically outer portions of the alignment balls 51 of the tip-side alignment bearing 50a contact the tip-side tapering surface 76. As a result, ends, on the axial-direction base side Lb, of the diametrically outer portions of the alignment balls 51 of the tip-side alignment bearing 50a contact the tapering surface 63a.

As can be seen, the tip-side tapering surface 76 and the tapering surface 63a contacting the diametrically outer portions of the alignment balls 51 of the tip-side alignment bearing 50a incline oppositely to each other with respect to the axial direction L. Therefore, the diametrically outer portions of the alignment balls 51 are restricted by the tip-side tapering surface 76 and the tapering surface 63a, which form a tapering shape expanding diametrically inward as seen in a vertical cross-sectional view thereof.

The tapering surface 63a inclining as described above and thus restricting the diametrically outer portions of the alignment balls 51 of the tip-side alignment bearing 50a is urged toward the axial-direction tip side Lf by the coil spring 64. Therefore, as represented by the arrows in FIG. 9(b), which is an enlarged view of part "a", the urging force of the coil spring 64 via the tapering surface 63a acts diametrically inward on the alignment balls 51 of the tip-side alignment bearing 50a.

Similarly, the tip-side tapering surface 911 is a part of the tapering member 91 aligned by contact of the position matching inclining surface 191 at the tip end of the holder body 10 and the position adjustment tapering surface 912. Therefore, the base-side contact ring 60b having the tapering surface 63b moves toward the axial-direction base side Lb against the urging force of the coil spring 64. As a result, ends, on the axial-direction base side Lb, of the diametrically outer portions of the alignment balls 51 contact the base-side tapering surface 911 and ends, on the axial-direction tip side Lf, of the diametrically outer portions of the alignment balls 51 contact the tapering surface 63b.

As can be seen, the base-side tapering surface 911 and the tapering surface 63b contacting the diametrically outer portions of the alignment balls 51 of the base-side alignment bearing 50b incline oppositely to each other with respect to the axial direction L. Therefore, the diametrically outer portions of the alignment balls 51 are restricted by the base-side tapering surface 911 and the tapering surface 63b, which form a tapering shape expanding diametrically inward as seen in a vertical cross-sectional view thereof.

The tapering surface 63b inclining as described above and thus restricting the diametrically outer portions of the alignment balls 51 is urged toward the axial-direction base side Lb by the coil spring 64. Therefore, the urging force of the coil spring 64 via the tapering surface 63b acts diametrically inward on the alignment balls 51 of the base-side alignment bearing 50b (see the arrows in FIG. 9(b), which is an enlarged view of part "a").

As can be seen, the diametrically outer portions of the alignment balls 51 (51a, 51b) of the alignment bearings 50a and 50b are acted on by the urging force of the coil spring 64. As shown in FIG. 9, the alignment balls 51 (51a, 51b) are caused, by the retainers 52, to contact the flat outer surfaces 6a bridging over the corners 6b of the base shaft 6. Therefore, the plurality of alignment balls 51 contacting the surfaces on both of the sides of the corners 6b may align the base shaft 6.

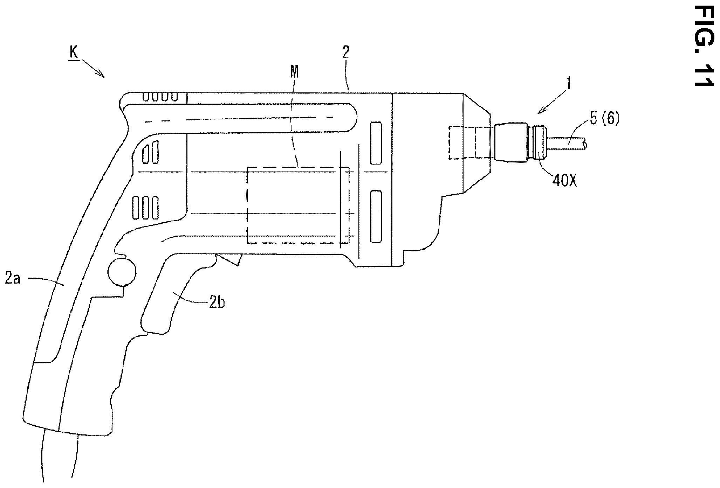

Now, with reference to FIG. 11 through FIG. 20, an alignment adaptor 40X in embodiment 2 and the base shaft holder 1 having the alignment adaptor 40X attached thereto will be described.

In the following description regarding the alignment adaptor 40X in embodiment 2 and the base shaft holder 1 having the alignment adaptor 40X attached thereto, elements identical to those of the alignment adaptor 40 and the base shaft holder 1 described above will bear the identical reference signs thereto, and detailed descriptions thereof will be omitted.

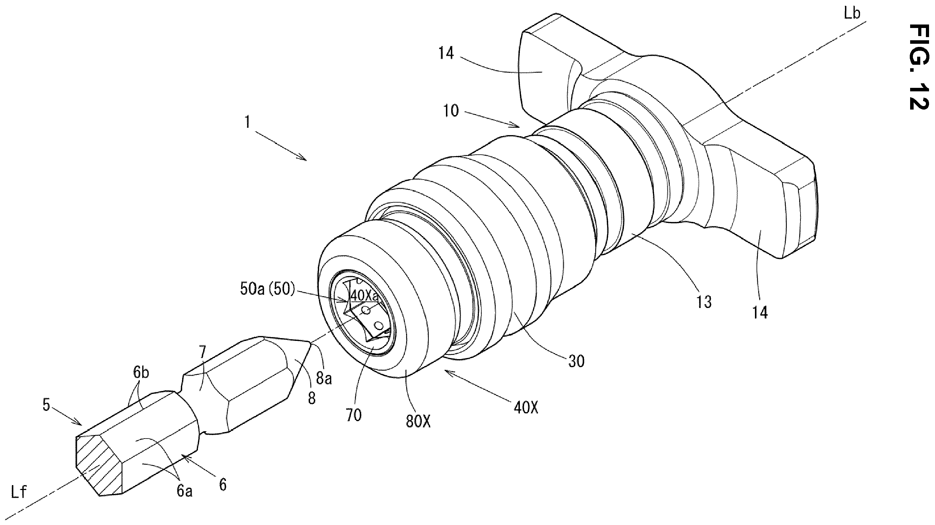

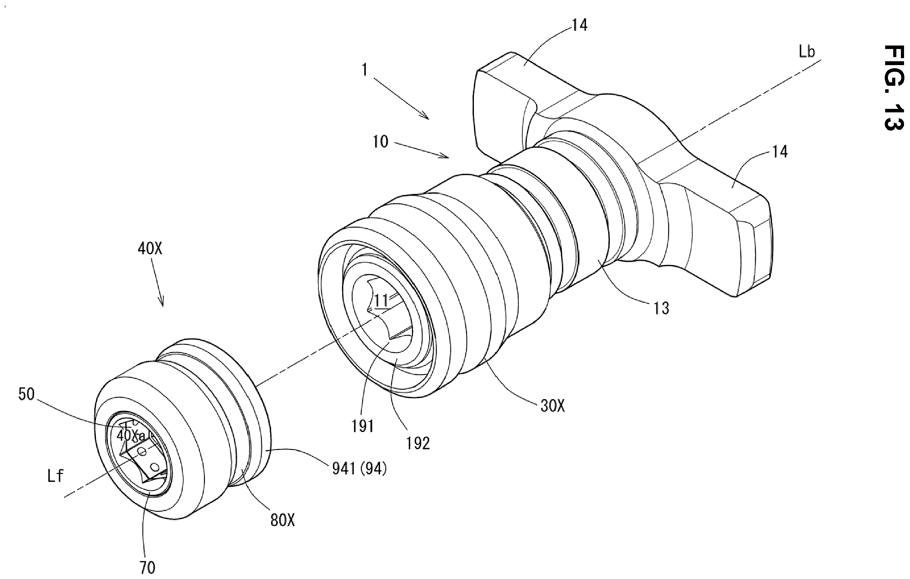

FIG. 11 is a front view of the electric tool K including the base shaft holder 1 having the alignment adaptor 40X in embodiment 2 attached thereto. FIG. 12 is a perspective view of the base shaft holder 1 having the alignment adaptor 40X attached thereto. FIG. 13 is a perspective view of the base shaft holder 1 before the alignment adaptor 40X is attached thereto.

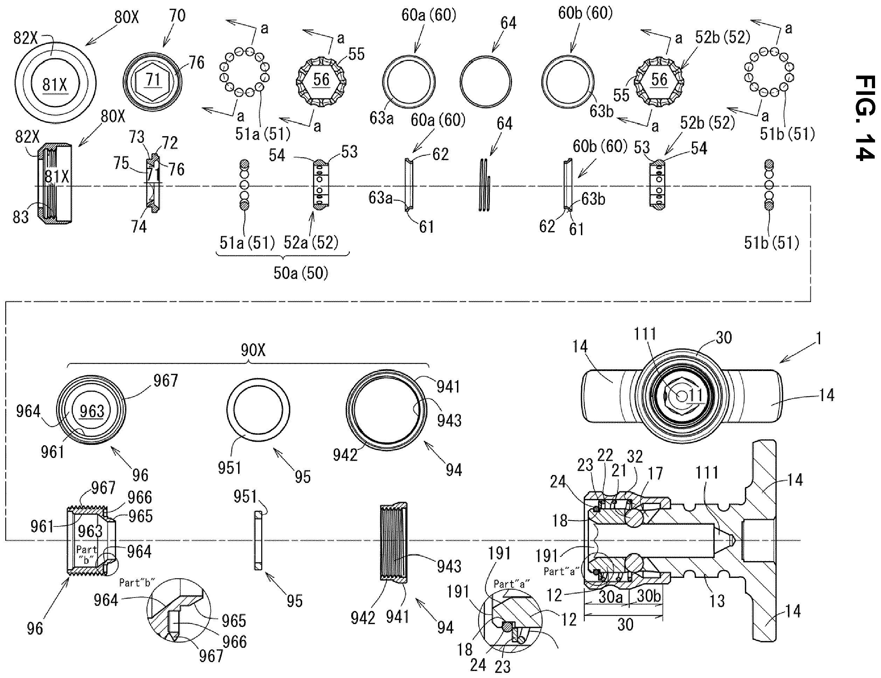

FIG. 14 is an exploded view showing front views, rear views, side views and cross-sectional views of elements of the alignment adaptor 40X and the base shaft holder 1.

In more detail, FIG. 14 shows vertical cross-sectional views and front views of the base shaft holder 1, a diametrically outer member 94, a ring magnet 95, the contact rings 60, the alignment balls 51, the retainers 52 and the coil spring 64; and vertical cross-sectional views and rear views of a tapering cylindrical accommodation member 96, the tip-side inclining-surface ring 70 and a tip cap 80X.

The cross-sectional views of the alignment balls 51 and the retainers 52 included in the alignment bearings 50 (50a, 50b) are taken along lines extending through the accommodation portions 55 of the retainers 52, which are ring-shaped, namely lines a-a of the front views of the alignment balls 51 and the retainers 52.

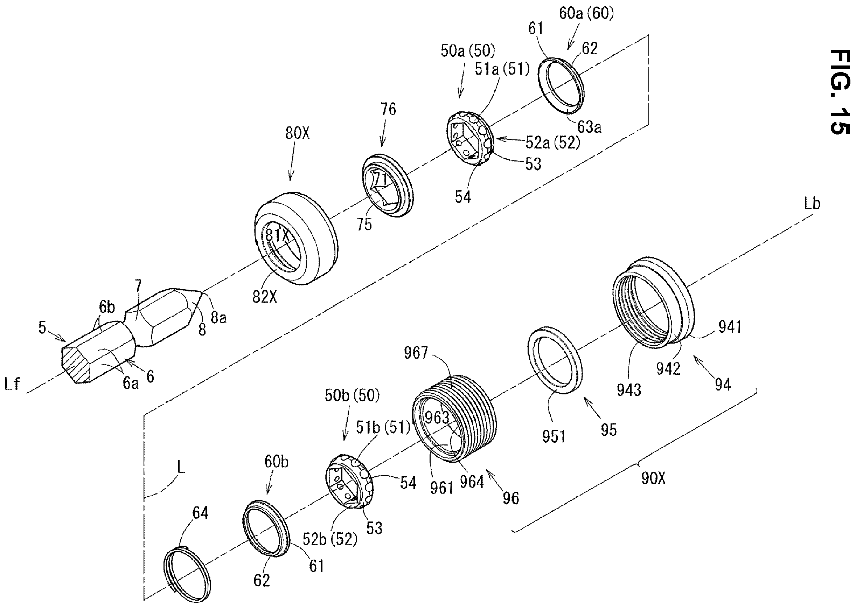

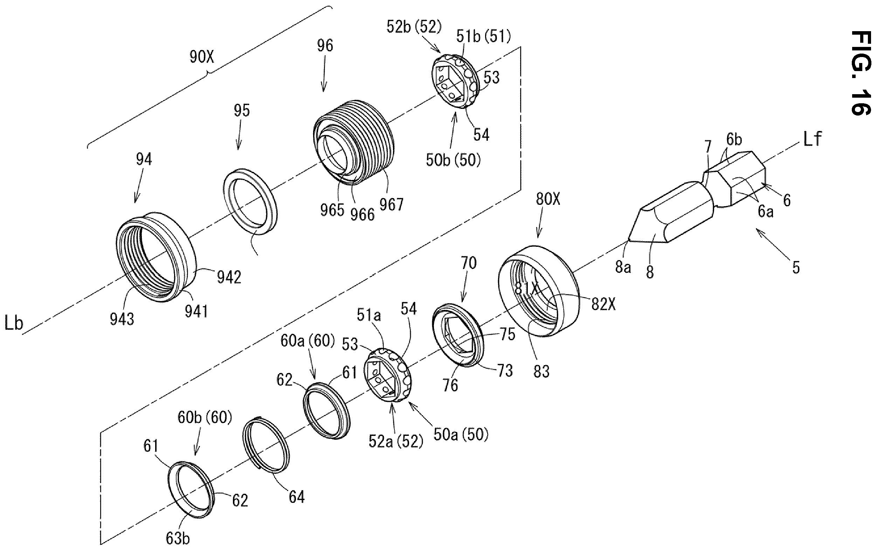

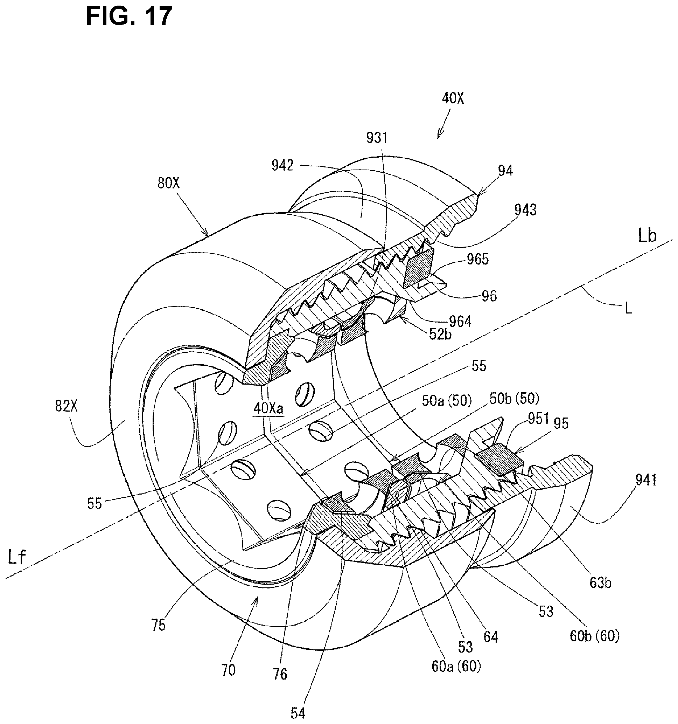

FIG. 15 is an exploded perspective view of the elements of the alignment adaptor 40X as seen from the side of a front surface thereof. FIG. 16 is an exploded perspective view of the elements of the alignment adaptor 40X as seen from the side of a rear surface thereof. FIG. 17 is a perspective view of the alignment adaptor 40X. In FIG. 17, the alignment balls 51 and the coil spring 64 are omitted, and a part of the alignment adaptor 40X on the side closer to the viewer of FIG. 17 is cut out.

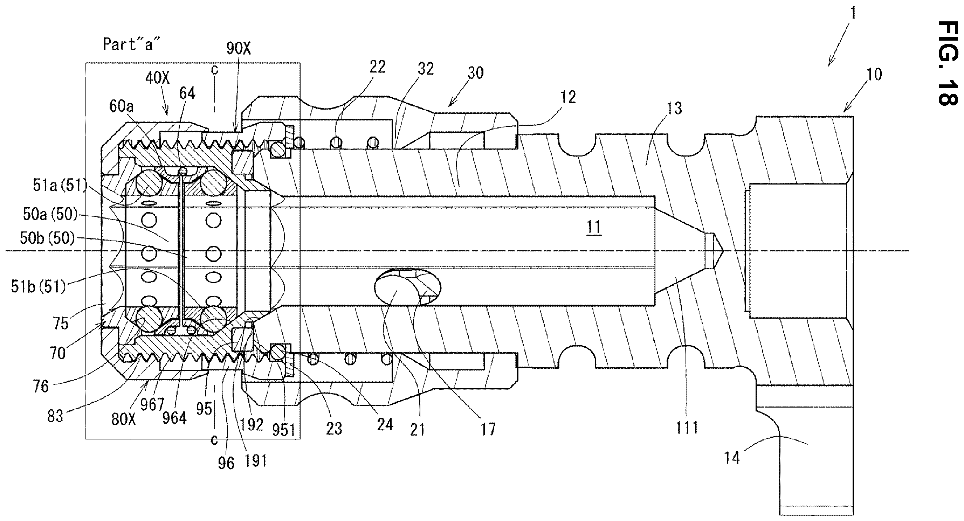

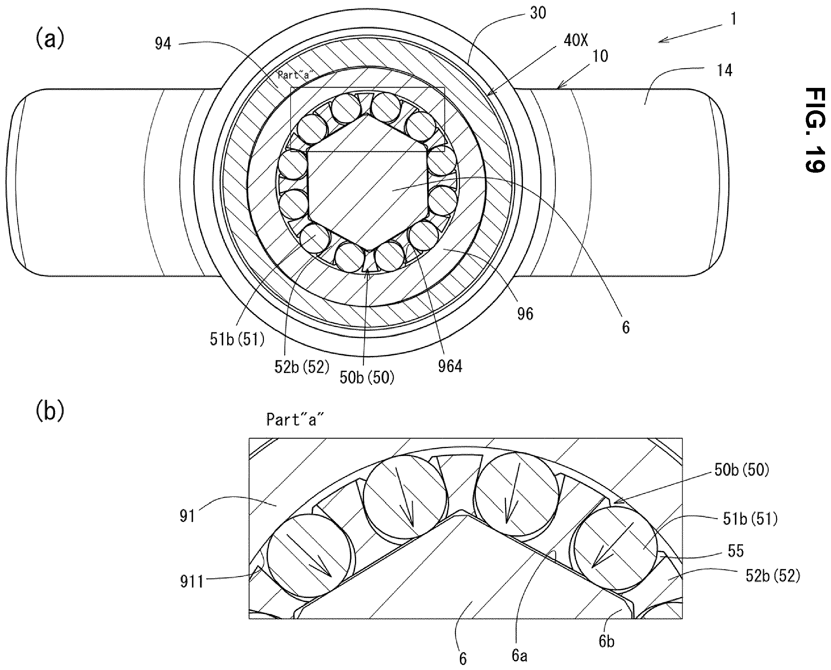

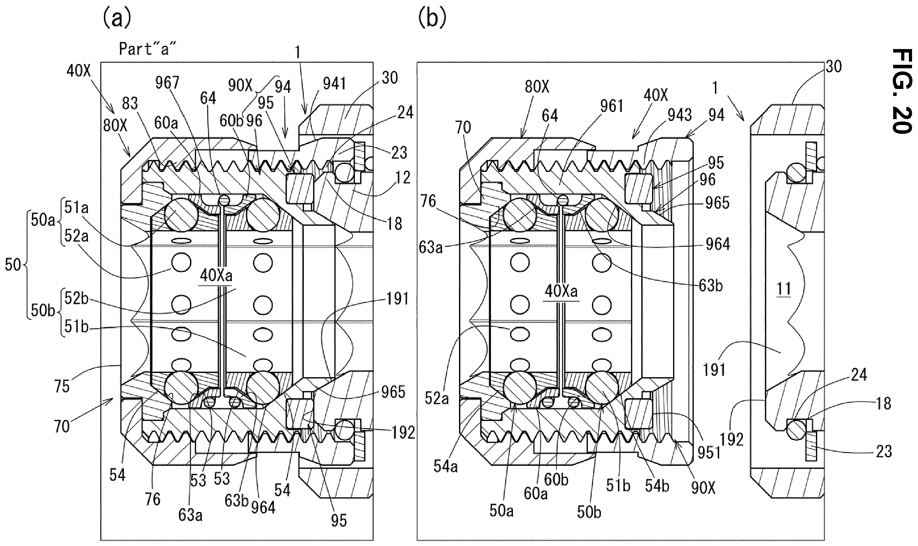

FIG. 18 is a vertical cross-sectional view of the base shaft holder 1 having the alignment adaptor 40X attached thereto. FIG. 19 provides views illustrating alignment performed by the alignment adaptor 40X. FIG. 20 provides vertical cross-sectional views of the base shaft holder 1 having the alignment adaptor 40X attached thereto.

In more detail, FIG. 19(a) is a cross-sectional view taken along line c-c in FIG. 18. FIG. 19(b) is an enlarged view of part "a" in FIG. 19(a). FIG. 20(a) is an enlarged view of part "a" in FIG. 18 in the state where the alignment adaptor 40X is attached to the tip end of the short-diameter front body portion 12 of the base shaft holder 1. FIG. 20(b) is an enlarged view of part "a" before the alignment adaptor 40X is attached.

Specifically, the base shaft holder 1, the alignment bearings 50, the contact rings 60, the coil spring 64, and the tip-side inclining-surface ring 70 have the same structures as those of the alignment adaptor 40 described above, and descriptions thereof will be omitted. The tip cap 80X and an attachment unit 90X having different structures from the elements corresponding thereto will be described.

As shown in FIG. 14 through FIG. 18, the tip cap 80X is a cylindrical member that is outserted to a cylindrical body 961 of the tapering cylindrical accommodation member 96 of the attachment unit 90X described below to be integrated with the attachment unit 90X. The tip cap 80X is also a bottomed cylindrical member lying horizontally. The tip cap 80X has an opening at a tip end thereof on the axial-direction tip side Lf, and the opening communicates with an inner through-space 81X extending through the tip cap 80X in the axial direction L.

The opening is formed by a diametrically inward restriction protrusion 82X protruding diametrically inward. In an inner surface of the tip cap 80X on the axial-direction tip side Lf, a screw groove 83 screwable with a screw ridge 967 formed on an outer circumferential surface of the tapering cylindrical accommodation member 96 is provided.

The attachment unit 90X is provided to attach the alignment adaptor 40X to the tip end of the short-diameter front body portion 12 of the base shaft holder 1, and includes the diametrically outer member 94 having a generally cylindrical shape, the ring magnet 95 having a ring shape, and the tapering cylindrical accommodation member 96 located in this order from the axial-direction base side Lb.

The diametrically outer member 94 is outserted to the tip end of the short-diameter front body portion 12 on the axial-direction tip side Lf, and the tapering cylindrical accommodation member 96 accommodates the alignment bearings 50, the contact rings 60 and the coil spring 64.

The diametrically outer member 94 is a generally cylindrical member that bridges over a border between the tip end of the short-diameter front body portion 12 and an end, on the axial-direction base side Lb, of the tapering cylindrical accommodation member 96 located at the tip end of the short-diameter front body portion 12 and is provided on the outer circumferential surfaces thereof. The diametrically outer member 94 is generally cylindrical, and includes a base-end long-diameter portion 941 inserted between the outer circumferential surface of the tip end of the short-diameter front body portion 12 and the inner surface of the sleeve 30, and a tip-side portion 942 located diametrically outer to the tapering cylindrical accommodation member 96 on the axial-direction base side Lb. The base-end long-diameter portion 941 and the tip-side portion 942 are integrated with each other. The diametrically outer member 94 has a screw groove 943 provided in an inner surface thereof. The screw groove 943 is screwable with the screw ridge 967 formed on the outer surface of the tapering cylindrical accommodation member 96. The diametrically outer member 94 is formed of a magnetic metal material.

The ring magnet 95 is ring-shaped and has polarities generated on both of two sides thereof in the axial direction L. The ring magnet 95 has a flat contact surface 951 facing the tip surface 192 of the short-diameter front body portion 12.

The tapering cylindrical accommodation member 96 includes the cylindrical body 961, which is a generally ring-shaped bottomed member and has an accommodation through-space 963 extending therethrough in the axial direction L at a center as seen in a front view thereof. The tapering cylindrical accommodation member 96 has a base-side tapering surface 964, expanding like a bell mouth, on the axial-direction base side Lb of the accommodation through-space 963 in the cylindrical body 961.

The tapering cylindrical accommodation member 96 has a position adjustment tapering surface 965 on the axial-direction base side Lb. The position adjustment tapering surface 965, together with the position matching inclining surface 191 of the base shaft holder 1, adjusts the axial direction L of the alignment adaptor 40X with respect to the axial direction L of the base shaft holder 1.

The position adjustment tapering surface 965 enclosing a part of the accommodation through-space 963 protrudes toward the axial-direction base side Lb, and has a tapering outer surface.

The position adjustment tapering surface 965 is a tapering protrusion, and the position thereof is to be adjusted by use the position matching inclining surface 191, in such a direction as to match the axial direction L of the alignment adaptor 40 to the alignment direction L of the base shaft holder 1. This will be described in more detail. In the state of being attached to the base shaft holder 1, the position adjustment tapering surface 965 faces the position matching inclining surface 191 formed at the inner surface of the tip end of the short-diameter front body portion 12. The position adjustment tapering surface 965 inclines at an inclination angle generally equal to that of the position matching inclining surface 191.

The position adjustment tapering surface 965 has a fitting groove 966 formed in an outer circumferential surface thereof. The ring magnet 95 is fittable to the fitting groove 966. The position adjustment tapering surface 965 also has the screw ridge 967 formed on the outer circumferential surface thereof. The screw ridge 967 is screwable with the screw groove 943 of the diametrically outer member 94 and the screw groove 83 of the tip cap 80X.

The accommodation through-space 963 of the cylindrical body 961 accommodates the alignment bearings 50, the contact rings 60 and the coil spring 64, in the state where the base-side tapering surface 964 of the tapering cylindrical accommodation member 96 is exposed to the through-space 933.

In the tapering cylindrical accommodation member 96 having the above-described structure, the ring magnet 95 is fitted into, and thus is integrated with, the fitting groove 966. The tapering cylindrical accommodation member 96 is formed of a magnetic metal material magnetizable by a magnetic force of the ring magnet 95.

The attachment unit 90X including the elements having the above-described structures may attach the alignment adaptor 40X to the tip end of the short-diameter front body portion 12.

This will be described in more detail. The screw groove 943 of the diametrically outer member 94 is screwed with the screw ridge 967 from the axial-direction base side Lb of the tapering cylindrical accommodation member 96 having the ring magnet 95 fitted into the fitting groove 966. Thus, the attachment unit 90X is assembled. In this state, the amount of screwing of the screw groove 943 and the screw ridge 967 may be adjusted in accordance with the shape of the base shaft holder 1, to which the alignment adaptor 40X is to be attached.

As described above regarding the alignment adaptor 40, the alignment bearings 50, the contact rings 60 and the coil spring 64 assembled as described above are accommodated, from the axial-direction tip side Lf, into the accommodation through-space 963 of the attachment unit 90X assembled as described above.

At this point, the tip-side alignment bearing 50b is assembled such that the second inclining surface 54 thereof faces the base-side tapering surface 964 exposed in the accommodation through-space 963 toward the axial-direction tip side Lf from the axial-direction base side Lb.

The tip-side inclining-surface ring 70 is located on the axial-direction tip side Lf of the alignment bearings 50, the contact rings 60 and the coil spring 64 accommodated in the accommodation through-space 963 of the tapering cylindrical accommodation member 96. The tip cap 80X is attached to the tapering cylindrical accommodation member 96 from the axial-direction tip side Lf. In addition, the screw ridge 967 of the tapering cylindrical accommodation member 96 is screwed with the screw groove 83 to integrate the tip cap 80X with the tapering cylindrical accommodation member 96. Thus, the alignment adaptor 40X is assembled.

As described above, in the alignment adaptor 40X assembled in this manner, the base-side tapering surface 964 and the second inclining surface 54 of the base-side alignment bearing 50b face each other in the accommodation through-space 963 on the axial-direction base side Lb. In addition, the first inclining surface 53 of the tip-side alignment bearing 50a faces the tip-side tapering surface 76 of the tip-side inclining-surface ring 70.

As shown in FIG. 17, in the alignment adaptor 40X having such a structure, a through-hole 40Xa extending through the alignment adaptor 40X in the axial direction L is formed of the through-hole 71 of the tip-side inclining-surface ring 70, the axial-direction through-spaces 56 of the retainers 52 included in the alignment bearings 50, and the accommodation through-space 963 of the tapering cylindrical accommodation member 96 included in the attachment unit 90X.

In the state where the alignment adaptor 40X is attached to the tip end of the short-diameter front body portion 12, an end, on the axial-direction base side Lb, of the base-end long-diameter portion 941 of the diametrically outer member 94 contacts the securing ring 23 of the base shaft holder 1 from the axial-direction tip side Lf, and the engagement groove 18 contacts an inner surface of the base-end long-diameter portion 941.

As described above, in the alignment adaptor 40X attached to the tip end of the short-diameter front body portion 12, the base-side tapering surface 964 acts like the base-side tapering surface 911 of the alignment adaptor 40. The position adjustment tapering surface 965 acts like the position adjustment tapering surface 912. The flat contact surface 951 of the ring magnet 95 acts like the flat contact surface 913. Therefore, like the alignment adaptor 40, the alignment adaptor 40X may be secured firmly to the tip end of the short-diameter front body portion 12 in a stable manner and may provide an alignment function.

The alignment adaptor 40 (40X) attached to the base shaft holder 1 as described above and aligning the base shaft 6 held by the base shaft holder 1 includes the alignment bearings 50 (50a, 50b) contacting and aligning the base shaft 6, of the rotary jig 5, extending through the through-hole 40a (40Xa), and also includes the attachment unit 90 (90X) attaching the alignment bearings 50 (50a, 50b) to the tip end, on the axial-direction tip side Lf, of the holder body 10 included in the base shaft holder 1 causing the base shaft 6 to be inserted thereto from the axial-direction tip end Lf to hold the base shaft 6. Therefore, the alignment adaptor 40 (40X) may align the base shaft 6 held by the base shaft holder 1, and thus the rotary jig 5 may be prevented from vibrating while rotating.

This will be described in more detail. Since the alignment adaptor 40 (40X) is attached to the base shaft holder 1 holding the base shaft 6, the alignment bearings 50 (50a, 50b) align the base shaft 6 held by the base shaft holder 1, and thus the rotary jig 5 may be prevented from vibrating while rotating.

When the base shaft 6 aligned by the alignment adaptor 40 (40X) in this manner is inserted into the base shaft insertion hole 11 in communication with the through-hole 40a (40Xa) of the alignment adaptor 40 (40X), the base-side inclining portion 8, which is the base end of the base shaft 6, is supported and aligned by an inner wall of the tapering space 111 in the base shaft insertion hole 11 of the base shaft holder 1 as described above. The base-side inclining portion 8 is further aligned by the alignment bearings 50 of the alignment adaptor 40 (40X) attached to the base shaft holder 1 on the axial-direction tip side Lf. Therefore, as compared with, for example, in the case where the base-side inclining portion 8 is aligned inside the sleeve 30 of the base shaft holder 1, the distance from the inner wall of the tapering space 111 supporting the base-side inclining portion 8 in the base shaft insertion hole 11 of the base shaft holder 1 to the alignment bearings 50 (50a, 50b) of the alignment adaptor 40 (40X) is increased. As a result, the alignment may be performed with higher precision.

The attachment unit 90 (90X) is attached to a tip end, on the axial-direction tip side Lf, of the base shaft insertion hole 11 of the holder body 10. The attachment unit 90 (90X) has the position adjustment tapering surface 912 (965). The position of the position adjustment tapering surface 912 (965) is to be adjusted by use of the position matching inclining surface 191 expanding toward a tip end thereof, so as to match the axial direction L of the alignment bearings 50 (50a, 50b) to the axial direction L of the holder body 10. Therefore, the alignment adaptor 40 (40X) may be attached easily such that the axial direction L thereof matches the axial direction L of the holder body 10.

This will be described in more detail. When the position adjustment tapering surface 912 (965) of the tapering member 91 (tapering cylindrical accommodation member 96) is put into surface contact with the position matching inclining surface 191 formed at the tip end of the base shaft insertion hole 11 of the holder body 10, the position of the position adjustment tapering surface 912 (965) is adjusted such that the axial direction L of the alignment adaptor 40 (40X) matches the axial direction L of the holder body 10. Therefore, the alignment adaptor 40 (40X) may be attached easily such that the axial direction L thereof matches the axial direction L of the holder body 10. As a result, the base shaft 6 may be aligned to the base shaft holder 1 with high precision.

In addition, the alignment adaptor 40 (40X) is attached to the holder body 10 such that the axial directions L thereof match each other. The base shaft 6 is inserted into the base shaft insertion hole 11 via the alignment adaptor 40 (40X). In the state where the base shaft 6 is held by the base shaft holder 1, the alignment adaptor 40 (40X) is slightly rotated about the axial direction L with respect to the holder body 1. As a result, the position adjustment tapering surface 912(965) of the alignment adaptor 40 (40X) and the position matching inclining surface 191 of the holder body 10 are rotated with respect to each other. In this manner, the axial direction L of the holder body 10 and the axial direction L of the alignment adaptor 40 (40X) are adjusted with respect to each other. Therefore, the tolerance or the like provided by, for example, processing or assembly is absorbed, and as a result, the precision of the position adjustment, in the axial direction L, of the holder body 10 and the alignment adaptor 40 (40X) may be improved.

The tapering member 91 (tapering cylindrical accommodation member 96) of the attachment unit 90 (90X) is at least partially formed of a magnet magnetically attractable to the holder body 10, which is formed of a magnetic metal material. Therefore, the alignment adaptor 40 (40X) may be detachably attached easily to the holder body 10, which is formed of a magnetic metal material.

This will be described in more detail. As compared with, for example, in the case where a screw portion such as a screw ridge or the like is provided in an attachment unit of an alignment adaptor to attach or detach the alignment adaptor to or from the holder body 10 by screwing or unscrewing, the alignment adaptor 40 (40X) may be attached or detached to or from the holder body 10 more easily by the magnetic force of the magnet used to form at least a part of the tapering member 91 (ring magnet 95 attached to the tapering cylindrical accommodation member 96).

There may be a case where a screw portion such as a screw ridge or the like is provided in the attachment unit 90 (90X) of the alignment adaptor 40 (40X) in order to detachably attach the alignment adaptor 40 (40X) to the holder body 10 by screwing as described above, but the holder body 10 of the base shaft holder 1 in use includes no screw portion. In this case, a screw portion needs to be provided in the holder body 10. By contrast, according to the present invention, the alignment adaptor 40 (40X) is attached to the holder body 10 by the magnetic force of the magnet (ring magnet 95 attached to the tapering cylindrical accommodation member 96) used to form at least a part of the tapering member 91. Therefore, as long as the holder body 10 is formed of a magnetic metal material, the alignment adaptor 40 (40X) may be attached or detached easily to or from the base shaft holder 1 in use with no need to process the base shaft holder 1.

The flat contact surface 913 (951) is provided at the tapering member 91, formed of a magnet (ring magnet 95 attached to the tapering cylindrical accommodation member 96), so as to face the tip surface 192 of the holder body 10. In addition, an assembly of the outsert ring 92 and the cylindrical accommodation member 93 (diametrically outer member 94) formed of a magnetic metal material is provided to bridge over a border between the tapering member 91 (tapering cylindrical accommodation member 96) and the holder body 10 on the diametrically outer side. Therefore, the tapering member 91 (tapering cylindrical accommodation member 96) is caused to be magnetically attracted to the holder body 10, and thus the alignment adaptor 40 (40X) may be detachably attached to the holder body 10 easily.

The assembly of the outsert ring 92 and the cylindrical accommodation member 93 (diametrically outer member 94) is provided to bridge over a border between the tapering member 91 (tapering cylindrical accommodation member 96) and the holder body 10 on the diametrically outer side. Therefore, the tapering member 91 (tapering cylindrical accommodation member 96), the holder body 10, and the assembly of the outsert ring 92 and the cylindrical accommodation member 93 (diametrically outer member 94) may form a magnetic circuit. For this reason, the attachment unit 90 (90X) may be attached to the holder body 10 more firmly than by mere use of a magnetic force.

The flat contact surface 913 (951) of the tapering member 91 formed of a magnet (ring magnet 95 attached to the tapering cylindrical accommodation member 96) is caused to face the tip surface 192, so that the flat contact surface 913 (951) is magnetically attracted to the holder body 10. As a result, an area size of a contact area where the tapering member 91 (tapering cylindrical accommodation member 96) and the holder body 10 contact each other is increased. Therefore, the attachment unit 90 (90X) may be attached more stably to, and secured more firmly to, the holder body 10.

In addition, the tapering member 91 (tapering cylindrical accommodation member 96), the holder body 10, and the assembly of the outsert ring 92 and the cylindrical accommodation member 93 (diametrically outer member 94) form a magnetic circuit. Therefore, the base shaft 6 formed of a magnetic metal material is not inadvertently attracted magnetically, and thus the ease of handling may be improved.

The alignment bearings 50 (50a, 50b) each include the alignment balls 51 provided to contact the base shaft 6, inserted into the through-hole 40a (40Xa), in at least three directions to perform the alignment. Therefore, the alignment balls 51 contact the base shaft 6 in at least three directions and may align the base shaft 6 with high precision .

The inclining members (70, 91, 96) are provided to respectively have the inclining surfaces (76, 911, 964) inclining with respect to the axial direction L in such a direction as to guide, diametrically inward in the through-hole 40a (40Xa), the alignment balls 51 in contact with the inclining members (70, 91, 96). The coil spring 64 is provided to urge the alignment balls 51 in contact therewith toward the inclining surfaces (76, 911, 964) inclining with respect to the axial direction L in such a direction as to guide the alignment balls 51 diametrically inward in the through-hole 40a (40Xa). Therefore, the base shaft 6 held by the base shaft holder 1 is aligned, and thus the rotary jig 5 may be prevented from vibrating while rotating.

This will be described in more detail. The alignment balls 51 urged by the coil spring 64 contact the inclining surfaces (76, 911, 964) provided at the inclining members (70, 91, 96). As a result, the alignment balls 51 move diametrically inward by the inclining surfaces (76, 911, 964), or the urging force of the coil spring 64 acts diametrically inward via the alignment balls 51. Therefore, the alignment balls 51 may contact the base shaft 6, inserted into the base shaft insertion hole 11 of the holder body 10, in at least three directions and thus align the base shaft 6. For this reason, the base shaft 6 held by the base shaft holder 1 is aligned, and thus the rotary jig 5 may be prevented from vibrating while rotating.

The tip-side alignment bearing 50a is provided to align the base shaft 6 on the axial-direction tip side Lf in the axial direction L, and the base-side alignment bearing 50b is provided to align the base shaft 6 on the axial-direction base side Lb in the axial direction L. The tip-side tapering surface 76 is provided to guide, diametrically inward, the tip-side alignment bearing 50a in contact therewith. The base-side tapering surface 911 (964) is provided to guide, diametrically inward, the base-side alignment bearing 50b in contact therewith. The tip-side inclining-surface ring 70 is provided to have the tip-side tapering surface 76, and the tapering member 91 (tapering cylindrical accommodation member 96) is provided to have the base-side tapering surface 911 (964). The coil spring 64 is located between the tip-side alignment bearing 50a and the base-side alignment bearing 50b in the axial direction L, and is structured to urge the tip-side alignment bearing 50a and the base-side alignment bearing 50b in such a direction as to separate the tip-side alignment bearing 50a and the base-side alignment bearing 50b from each other in the axial direction L. Therefore, the tip-side alignment bearing 50a and the base-side alignment bearing 50b may each align the base shaft 6, namely, may align the base shaft 6 at two positions in the axial direction L. Thus, the base shaft 6 may be aligned with higher precision.

The alignment balls 51 include the alignment balls 51a aligning the base shaft 6 on the axial-direction tip side Lf in the axial direction L and the alignment balls 51b aligning the base shaft 6 on the axial-direction base side Lb in the axial direction L. In addition, the tip-side tapering surface 76 is provided to contact and guide the alignment balls 51a diametrically inward, and the base-side tapering surface 911 (964) is provided to contact and guide the alignment balls 51b diametrically inward. Therefore, the coil spring 64 urges the tip-side alignment bearing 50a and the tip-side tapering surface 76 in such a direction as to cause the tip-side alignment bearing 50a and the tip-side tapering surface 76 to approach each other, and urges the base-side alignment bearing 50b and the base-side tapering surface 911 (964) in such a direction as to cause the base-side alignment bearing 50b and the base-side tapering surface 911 (964) to approach each other.

The tip-side contact ring 60a is provided to be located between the tip-side alignment bearing 50a and the coil spring 64, to incline with respect to the axial direction L in a direction opposite to that of the tip-side tapering surface 76, and to have the tapering surface 63a in contact with the tip-side alignment bearing 50a. The base-side contact ring 60b is provided to be located between the base-side alignment bearing 50b and the coil spring 64, to incline with respect to the axial direction L in a direction opposite to that of the base-side tapering surface 911 (964), and to have the tapering surface 63b in contact with the base-side alignment bearing 50b. Therefore, the urging force of the coil spring 64 may be divided into a component acting in such a direction as to urge the tip-side alignment bearing 50a toward the tip-side tapering surface 76 and a component acting in the diametrical direction so as to cause the tip-side alignment bearing 50a to contact the base shaft 6, and also divided into a component acting in such a direction as to urge the base-side alignment bearing 50b toward the base-side tapering surface 911 (964) and a component acting in the diametrical direction so as to cause the base-side alignment bearing 50b to contact the base shaft 6. For this reason, even if a diametrically outward force acts on the tip-side alignment bearing 50a or the base-side alignment bearing 50b from the axial-direction base side Lb, such a force may be counteracted by the urging force of the coil spring 64.

An outer circumferential surface of the tip-side alignment bearing 50a contacting and aligning the base shaft 6 is restricted by the tip-side tapering surface 76 and the tapering surface 63a provided to expand diametrically inward as seen in a cross-sectional view taken along the axial direction L, in the state where the urging force of the coil spring 64 acts on the tip-side alignment bearing 50a. An outer circumferential surface of the base-side alignment bearing 50b in an aligning state is restricted by the base-side tapering surface 911 (964) and the tapering surface 63b provided to expand diametrically inward as seen in a cross-sectional view taken along the axial direction L, in the state where the urging force of the coil spring 64 acts on the base-side alignment bearing 50b. Therefore, even if a diametrically outward force acts on the alignment balls 51 from the axial-direction base side Lb, such a force may be counteracted by the urging force of the coil spring 64.

For this reason, the base shaft 6 held by the base shaft holder 1 is aligned, and thus the rotary jig 5 may be prevented certainly from vibrating while rotating.

The ring-shaped retainers 52 each retain the interval between the plurality of alignment balls 51 in the circumferential direction, and have the axial-direction through-spaces 56 extending therethrough in the axial direction L. The axial-direction through-spaces 56 are each a part of the through-hole 40a (40Xa). The plurality of alignment balls 51 having the interval therebetween in the circumferential direction retained by the retainers 52 in this manner are provided to contact, in synchronization, the outer surface of the base shaft 6 so as to hold the corners in at least three directions. Thus, the plurality of alignment balls 51 having the interval therebetween in the circumferential direction retained by the retainers 52 contact, in synchronization, the outer surface of the base shaft 6 so as to hold the corners in at least three directions. Therefore, the base shaft 6 may be aligned with high precision and held in the aligning through-hole 40a (40Xa), which includes the axial-direction through-spaces 56 of the retainers 52. Namely, the alignment balls 51 align the base shaft 6 held by the base shaft holder 1, and thus the rotary jig 5 may be prevented more certainly from vibrating while rotating.

In addition, since the plurality of alignment balls 51 are retained by the ring-shaped retainers 52, the alignment bearings 50 are assembled while the interval between the alignment balls 51 in the circumferential direction is retained. Thus, the ease of assembly of the alignment adaptor 40 (40X) including the alignment bearings 50 may be improved.

The electric tool K includes the motor M and a rotation transmission portion that transmits a rotation force of the motor M onto the center of a rotational axis thereof, and includes the base shaft holder 1 having the alignment adaptor 40 (40X) attached thereto. In the electric tool K having such a structure, the base shaft 6 is aligned, and the rotary jig 5 may be rotated with no vibration.

The through-hole according to the present invention corresponds to the through-hole 40a or 40Xa in the above-described embodiments, and in a similar manner,
the rotary jig corresponds to the rotary jig 5,
the base shaft corresponds to the base shaft 6,
the alignment portion corresponds to any one of the alignment bearings 50 (50a, 50b),
the tip side corresponds to the axial-direction tip side Lf,
the base shaft holder corresponds to the base shaft holder 1,
the holder body corresponds to the holder body 10,
the attachment member corresponds to the attachment unit 90 or 90X,
the attachment-type aligning device corresponds to the alignment adaptor 40 or 40X,
the tip-side tapering surface corresponds to the position matching inclining surface 191,
the axial direction corresponds to the axial direction L
the position adjustment portion corresponds to the position adjustment tapering surface 912 or 965,
the tip surface corresponds to the tip surface 192,
the facing portion corresponds to the flat contact surface 913 or 951,
the diametrically outer member corresponds to the assembly of the outsert ring 92 and the cylindrical accommodation member 93, or the diametrically outer member 94,
the alignment member corresponds to the alignment ball 51,
the inclining surface corresponds to the tip-side tapering surface 76, or the base-side tapering surface 911 or 964,
the inclining member corresponds to the tip-side inclining-surface ring 70, the tapering member 91 or the tapering cylindrical accommodation member 96,
the urging portion corresponds to the coil spring 64,
the tip-side alignment member corresponds to the tip-side alignment bearing 50a,
the base side corresponds to the axial-direction base side Lb,
the base-side alignment member corresponds to the base-side alignment bearing 50b,
the tip-side inclining surface corresponds to the tip-side tapering surface 76,
the base-side inclining surface corresponds to the base-side tapering surface 911 or 964,
the tip-side inclining member corresponds to the tip-side inclining-surface ring 70,
the base-side inclining member corresponds to the tapering member 91 or the tapering cylindrical accommodation member 96,
the axial-direction through-hole corresponds to the axial-direction through-space 56,
the retaining member corresponds to the retainer 52,
the driving device corresponds to the motor M,
the rotation transmission portion corresponds to the rotation transmission mechanism, and
the electric tool corresponds to the electric tool K.

However, the present invention is not limited to any of the above-described embodiments, and may be carried out in any of various other embodiments.

For example, the above-described base shaft holder 1 may be included in a rotary electric tool such as a vibration drill, an electric screwdriver or the like instead of the electric tool K, or may be included in a tool drivable manually, a tool drivable by an internal combustion engine or the like instead of a tool drivable electrically.

The above-described rotary jig 5 may be a rotatable drill bit, a cross-head or flat-head screwdriver bit or the like, and the base shaft 6 of the rotary jig 5 is also called a tool shank. The base shaft 6 is not limited to having a hexagonal cross-section and may have another polygonal cross-section such as a rectangular cross-section or the like, a circular cross-section or a cross-section of any of various other shapes in order to be aligned certainly with the base shaft holder 1.

Instead of the alignment balls 51 moving diametrically inward to contact the flat outer surfaces 6a of the base shaft 6 thus to align the base shaft 6, a component may be provided that is deformed, for example, is extended diametrically inward to contact the flat outer surfaces 6a of the base shaft 6. Alternatively, the base shaft 6 may be aligned by a single member such as, for example, an elastic ring that is outserted to the base shaft 6 so as to urge an outer circumferential surface of the base shaft 6 diametrically inward.

The alignment balls 51 may be replaced with, for example, a combination of a rotatable shaft perpendicular to the axial direction L and a plurality of rolling elements, such as rollers or the like, rotatable in the axial direction L, and such a combination may be structured to contact the flat outer surfaces 6a of the base shaft 6. Alternatively, rolling elements such as rollers or the like, or the alignment balls 51, may be provided on a rubber ring and urged diametrically inward by an urging force of the rubber ring to align the base shaft 6.

In the base shaft holder 1 described above, for aligning the base shaft 6, 12 alignment balls 51 are located with an equal interval in the circumferential direction and are caused to contact the flat outer surfaces 6a bridging over the corners 6b of the base shaft 6 having a hexagonal cross-section. Alternatively, for aligning the base shaft 6, six alignment balls 51 may be caused to contact the flat outer surfaces 6a bridging over three corners 6b, among the six corners 6b of the base shaft 6, which are located with an equal interval in the circumferential direction.

In the above description, the base-side inclining portion 8 of the base shaft 6 is aligned in the tapering space 111 provided at the base end of the base shaft insertion hole 11. Alternatively, the tapering space 111 may be replaced by another element located at the base end of the base shaft insertion hole 11. Still alternatively, the apex 8a or the vicinity thereof of the base-side inclining portion 8 may be aligned and supported. Still alternatively, it is not needed to align or support the apex 8a or the vicinity thereof of the base-side inclining portion 8.

In the alignment adaptor 40 (40X) described above, the tip-side tapering surface 76 and the base-side tapering surface 911 (964) incline oppositely to each other. Alternatively, the tip-side tapering surface 76 and the base-side tapering surface 911 (964) of the alignment adaptor 40 (40X) may incline in the same direction as each other. In this case, two coil springs 64 are provided to urge the tip-side alignment bearing 50a toward the tip-side tapering surface 76 and urge the base-side alignment bearing 50b toward the base-side tapering surface 911 (964) inclining in the same direction as that of the tip-side tapering surface 76.

In the alignment adaptor 40 (40X) described above, the tip-side tapering surface 76 and the base-side tapering surface 911 (964) incline at the same inclination angle as each other. Alternatively, the tip-side tapering surface 76 and the base-side tapering surface 911 (964) of the alignment adaptor 40 (40X) may incline at different inclination angles from each other. In this case, the tip-side alignment bearing 50a and the base-side alignment bearing 50b may align the base shaft 6 to different alignment degrees from each other.

### REFERENCE SIGNS LIST

- 1: base shaft holder
- 5: rotary jig
- 6: base shaft
- 10: holder body
- 40, 40X: alignment adaptor
- 40a, 40Xa: through-hole
- 50: alignment bearing
- 50a: tip-side alignment bearing
- 50b: base-side alignment bearing
- 51: alignment ball
- 52: retainer
- 56: axial-direction through-space
- 64: coil spring
- 70: tip-side inclining-surface ring
- 76: tip-side tapering surface
- 90, 90X: attachment unit
- 91: tapering member
- 92: outsert ring
- 93: cylindrical accommodation member
- 94: diametrically outer member
- 96: tapering portion accommodation cylindrical member
- 191: position matching inclining surface
- 192: tip surface
- 911, 964: base-side tapering surface
- 912, 965: position adjustment tapering surface
- 913, 951: flat contact surface
- L: axial direction
- Lb: axial-direction base side
- Lf: axial-direction tip side
- M: motor
- K: electric tool

## Claims

1. An attachment-type aligning device, comprising:
an alignment portion contacting and aligning a base shaft, of a rotary jig, extending through a through-hole; and
an attachment member attaching the attachment portion to a tip end of a holder body included in a base shaft holder allowing the base shaft to be inserted thereto from a tip side thereof and holding the base shaft,
wherein the attachment-type aligning device aligns the base shaft attached to, and held by, the base shaft holder.

2. The attachment-type aligning device according to claim 1, wherein the attachment member includes a position adjustment portion, the position of which is adjusted by use of a tip-side tapering surface formed at a tip end of a base shaft insertion hole of the holder body and expanding toward the tip end, the position of the position adjustment portion being adjusted such that an axial direction of the alignment portion matches an axial direction of the holder body.

3. The attachment-type aligning device according to claim 1 or 2, wherein the attachment member is at least partially formed of a magnet magnetically attractable to the holder body, which is formed of a magnetic metal material.

4. The attachment-type aligning device according to claim 3, wherein:
the attachment member formed of the magnet includes a facing portion facing a tip surface of the holder body, and
the attachment-type aligning device includes a diametrically outer member formed of a magnetic metal material and bridging over a border between the attachment member and the holder body on a diametrically outer side.

5. The attachment-type aligning device according to any one of claims 1 through 4, wherein the alignment portion includes an alignment member contacting, in at least three directions, the base shaft inserted into the through-hole to align the base shaft.

6. The attachment-type aligning device according to claim 5, further comprising:
an inclining member having an inclining surface inclining with respect to an axial direction in such a direction as to guide, diametrically inward in the through-hole, the alignment member in contact with the inclining member, and
an urging portion urging the alignment member in contact therewith toward the inclining surface inclining with respect to the axial direction in such a direction as to guide the alignment member diametrically inward in the through-hole.

7. The attachment-type aligning device according to claim 6, wherein:
the alignment member includes a tip-side alignment member aligning the base shaft on a tip side in the axial direction, and a base-side alignment member aligning the base shaft on a base side in the axial direction,
the inclining surface includes a tip-side inclining surface guiding, diametrically inward, the tip-side alignment member in contact wherewith, and a base-side inclining surface guiding, diametrically inward, the base-side alignment member in contact wherewith,
the inclining member includes a tip-side inclining member having the tip-side inclining surface, and a base-side inclining member having the base-side inclining surface, and
the urging portion is located between the tip-side alignment member and the base-side alignment member in the axial direction, and is structured to urge the tip-side alignment member and the base-side alignment member in such a direction as to separate the tip-side alignment member and the base-side alignment member from each other in the axial direction.

8. The attachment-type aligning device according to claim 6 or 7, further comprising a ring-shaped retaining member retaining an interval between a plurality of the alignment members in a circumferential direction and having an axial-direction through-hole extending therethrough in the axial direction,
wherein the axial-direction through-hole is a part of the through-hole.

9. An electric tool, comprising:
a driving device;
a rotation transmission portion transmitting a rotation force of the driving device onto the center of a rotational axis thereof; and
the base shaft holder having the attachment-type aligning device according to any one of claims 1 through 8 assembled thereto.
